# EUROPEAN PATENT APPLICATION

(11) **EP 4 596 501 A1**
(43) Date of publication of application: **06.08.2025**
(21) Application number: 23872385.2
(22) Date of filing: 27.09.2023
(51) Int. Cl.: C02F 1/00, C02F 1/50, C02F 9/20

(54) **WATER PURIFICATION APPARATUS USING WASTE WATER TREATMENT DEVICE**

(30) Priority: 30.09.2022 JP 2022157784
(71) Applicant: Osaka Yuka Industry Ltd., Hirakata City, Osaka 573-1191 (JP)
(72) Inventor: HOTTA, Teppei, Hirakata City, Osaka 5731191 (JP)
(74) Representative: Vossius & Partner Patentanwälte Rechtsanwälte mbB
(86) International application number: PCT/JP2023/035065
(87) International publication number: WO 2024/071163

(57) **Abstract**

Provided is a water purification apparatus using a wastewater treatment device, which allows reduction in size and cost of the apparatus and is capable of generating a sufficient amount of purified water with electric power supply means using natural energy, such as a solar panel or a wind power generator, without generating any useless wastewater. The water purification apparatus using a wastewater treatment device includes: a transportable base; foreign matter removal means for removing foreign matter from raw water supplied from an outside; a plurality of treatment tanks arranged on the base in accordance with water purification treatment steps for the raw water from which the foreign matter has been removed by the foreign matter removal means; a plurality of chemical agent tanks, each containing a chemical agent to be fed to at least one of the plurality of treatment tanks; filtration means for filtering treated water that has been treated in the plurality of treatment tanks; and disinfecting means for disinfecting the treated water that has been filtered by the filtration means to obtain potable water. All steps of a water purification treatment for turning the raw water into the potable water except for at least a step of removing the foreign matter from the raw water are completed on the base.

## Description

### Technical Field

The present invention relates to a water purification apparatus using a wastewater treatment device, which is based on a wastewater treatment device including a transportable base and performing a wastewater treatment to turn raw water into potable water.

### Background Art

Hitherto, wastewater treatment facilities (plants) have been configured to discharge various wastewaters as treated water. The wastewaters include: treatment wastewaters such as a degreasing and rinsing water and a chemical rinse water after a degreasing treatment and a chemical treatment, which are performed before painting of a metal product, which has been subjected to mechanical processing or an assembly step; a wastewater after a barrel polishing process of mixing and agitating polishing stones or a polisher and water with a product to be polished in a tank-type device; a wastewater after an alumite treatment (anodization treatment of aluminum); a wastewater after a plating process such as molten zinc plating; and a wastewater after a degreasing treatment and an acid pickling treatment with sulfuric acid or hydrochloric acid in a semiconductor manufacturing device or the like. After a chemical treatment is performed on a metal, an oxide thereof, or the like dissolved or mixed in the wastewater in accordance with chemical properties of the wastewater or the like, the wastewater is neutralized to precipitate dissolved matter or a mixture. After that, the precipitated solid matter is separated, and the obtained treated water is discharged (Patent Literature 1 and other Literatures).

The wastewater treatment facility (plant) includes: a plurality of treatment tanks in which chemical treatments are individually performed using acid, alkali, and the like in accordance with the kind or chemical properties of the wastewater to be treated, and the like; and a plurality of treatment tanks such as a separation tank for separating solid matter after predetermined chemical agents are fed in order in accordance with treatment steps performed in the treatment tanks so as to perform chemical treatments. In the wastewater treatment facility (plant), the plurality of treatment tanks are connected through intermediation of a pipeline in accordance with wastewater treatment capacity required for the facility, and equipment such as pipelines that allow predetermined chemical agents to be fed to the plurality of treatment tanks is provided. Thus, the wastewater treatment plant inevitably becomes an extremely complex facility, which is individually designed based on advanced chemical knowledge.

Hitherto, such a wastewater treatment facility (plant) has been individually designed and constructed by a designer and a constructor in accordance with the kind and chemical properties of the wastewater to be discharged from, for example, a user's factory, or in accordance with a scale, and has been installed in premises of the user's factory or the like. Thus, the wastewater treatment facility (plant) has technical problems in that it requires an extremely long time period for the wastewater treatment facility (plant) to start operating after the completion of design and construction and that manufacturing cost becomes inevitably high.

As mobile wastewater treatment unit and water purification apparatus, those disclosed in Patent Literature 2 and Patent Literature 3 have already been proposed.

In Patent Literature 2, there is disclosed a mobile wastewater treatment unit including: a wastewater treatment tank including a flowrate control tank; and a blower for supplying oxygen into the wastewater treatment tank, which are provided in a container for transport. The wastewater treatment tank includes an anaerobic tank and an aerobic tank. The container for transport has an inspection port for maintenance of the wastewater treatment tank.

Further, in Patent Literature 3, there is disclosed a water purification apparatus in which at least a solar battery module is arranged on a top plate of a container for freight transport. Meanwhile, a water purification apparatus main body including a plurality of pumps activated with electricity obtained from the solar battery module, and a control panel that uses the electricity and controls the water purification apparatus main body are disposed in the container. The water purification apparatus main body includes a solid-liquid separation treatment part and a supernatant collection device. Contaminated raw water and a flocculant are introduced into a reaction tank, and the solid-liquid separation treatment part separates the raw water into: a floc settled out by agitation means being rotated by a driving force of a drive motor provided to the reaction tank; and clear water now having a transparent color. The supernatant collection device is disposed between the solid-liquid separation treatment part and a filtration device on a downstream side. The supernatant collection device includes a transfer pump on a downstream side. The supernatant collection device pumps a supernatant to the downstream side through intermediation of movable pipe means. The movable pipe means is moved upward and downward in accordance with displacement of a water level in a supernatant collection tank, and sucks the supernatant so as not to suck a floating floc remaining in the clear water in the supernatant collection tank.

However, the wastewater treatment unit disclosed in Patent Literature 2 merely includes the anaerobic tank and the aerobic tank as wastewater treatment tanks. Thus, the wastewater treatment unit cannot deal with wastewaters having a wide variety of chemical properties including: pre-painting treatment wastewaters having various chemical properties, such as a degreasing and rinsing water and a chemical rinse water after a degreasing treatment and a chemical treatment; a wastewater after a barrel polishing process; a wastewater after an alumite treatment; and a wastewater after a plating process.

Further, the container-type water purification treatment apparatus disclosed in Patent Literature 3 has a mechanism of performing solid-liquid separation for impurities in the raw water through coagulation-sedimentation. Thus, this container-type water purification treatment apparatus has technical problems in that stationary time and a settlement area for the separation are required and that an apparatus size is increased to perform a batch operation and ensure the area. Further, in terms of properties of an RO film used as the filtration device, the amount of wastewater two or three times as much as a production amount are generated. Thus, the container-type water purification treatment apparatus has a technical problem in that some raw water is wasted.

Further, the container-type water purification treatment apparatus disclosed in Patent Literature 3 uses the solar battery module disposed on the top plate of the container. In view of the area of the solar battery module installed on the roof of a 40-foot container, a power generation amount of the solar battery module is about 2.7 kWh/day. This water purification treatment apparatus uses the RO film as the filtration device, and thus its filtration capacity is from 2.5 kWh/m³ to 3.0 kWh/m³. Further, the RO film requires a continuous operation of a high-output pump. Thus, when natural energy, with which a stable power generation amount is not expected, is used, the storage of electric power in a battery is indispensable. When loss (20% to 30%) due to charging and discharging of the battery or the like is taken into account, a water production amount per day is less than 1 m³.

Further, in the container-type water purification treatment apparatus disclosed in Patent Literature 3, the stationary time (in the case of a water purification plant) is supposed to be about 6 hr for the solid-liquid separation through coagulation-sedimentation, and the time of about 24 hr is required to store water in a filtration tank after the treatment with the RO film. As a result, a whole day or longer is required before the discharge of purified water is started. Thus, the container-type water purification treatment apparatus has a technical problem in that it takes a long time to start up.

Further, the container-type water purification treatment apparatus disclosed in Patent Literature 3 has a technical problem in that the container-type water purification treatment apparatus requires a high-output pump and thus is extremely expensive.

Further, the container-type water purification treatment apparatus disclosed in Patent Literature 3 generates a large amount of muddy soil containing water. As a result, a muddy soil treatment is troublesome, and a tank for storing the muddy soil is required. Thus, the container-type water purification treatment apparatus has a technical problem in that an ancillary facility is required.

### Citation List

### Patent Literature

[PTL 1] JP 8-24877 A
[PTL 2] JP 2015-39669 A
[PTL 3] WO 2010-46960 A

### Summary of Invention

### Technical Problem

An object of the present invention is to provide a water purification apparatus using a wastewater treatment device, the water purification apparatus making use of characteristics of the wastewater treatment device, which is capable of dealing with various wastewaters such as a pre-painting treatment wastewater, a wastewater in a barrel process, a wastewater after an alumite treatment, a wastewater after a plating process, and a wastewater after a degreasing treatment performed in a semiconductor manufacturing device and can be installed and operated at a desired location within a short period of time at low cost as compared to related-art devices.

Further, an object of the present invention is to provide a water purification apparatus using a wastewater treatment device, which allows reduction in size and cost of the apparatus and is capable of generating a sufficient amount of purified water with electric power supply means using natural energy, such as a solar panel or a wind power generator, without generating any useless wastewater.

### Solution to Problem

According to the invention described in claim 1, provided is a water purification apparatus using a wastewater treatment device, including:
a transportable base;
foreign matter removal means for removing foreign matter from raw water supplied from an outside;
a plurality of treatment tanks arranged on the base in accordance with water purification treatment steps for the raw water from which the foreign matter has been removed by the foreign matter removal means;
a plurality of chemical agent tanks, each containing a chemical agent to be fed to at least one of the plurality of treatment tanks;
filtration means for filtering treated water that has been treated in the plurality of treatment tanks; and
disinfecting means for disinfecting the treated water that has been filtered by the filtration means to obtain potable water,
in which all steps of a water purification treatment for turning the raw water into the potable water except for at least a step of removing the foreign matter from the raw water are completed on the base.

According to the invention described in claim 2, provided is a water purification apparatus using a wastewater treatment device, including:
one or a plurality of container main bodies into which raw water to be treated is introduced from an outside;
foreign matter removal means for removing foreign matter from the raw water that has been introduced from the outside;
a plurality of treatment tanks including at least a first treatment tank into which the raw water to be treated is to be introduced, a second treatment tank into which treated water that has been treated in the first treatment tank is to be introduced, and a third treatment tank into which the treated water that has been treated in the second treatment tank is to be introduced, the plurality of treatment tanks being arranged inside the container main body so that heights of liquid levels become lower in order;
first to fourth chemical agent tanks that contain chemical agents to be fed to the first to third treatment tanks;
first filtration means for filtering the treated water stored in the third treatment tank;
second filtration means for filtering the treated water that has been filtered by the first filtration means so as to turn the treated water into potable water; and
disinfecting means for disinfecting the treated water that has been filtered by the second filtration means to obtain potable water,
in which all steps of a water purification treatment for turning the raw water into the potable water except for at least a step of removing the foreign matter from the raw water are completed inside the one or plurality of container main bodies.

According to the invention described in claim 3, provided is the water purification apparatus using a wastewater treatment device according to claim 1 or 2, further including electric power supply means including at least one of a solar panel or a wind power generator, the electric power supply means supplying electric power to at least one or all of devices configured to transfer the raw water and the treated water, and feed and agitate the chemical agents.

According to the invention described in claim 4, provided is the water purification apparatus using a wastewater treatment device according to claim 2, in which the first and second treatment tanks are configured so that the wastewater or the treated water introduced into the first and second treatment tanks is retained therein for predetermined time periods, respectively.

According to the invention described in claim 5, provided is the water purification apparatus using a wastewater treatment device according to claim 2, in which the third treatment tank is arranged directly on a bottom surface of the container main body, and the treated water is transferred from the third treatment tank to the first filtration device by a pump.

According to the invention described in claim 6, provided is the water purification apparatus using a wastewater treatment device according to claim 2, in which a raw water tank for storing the raw water to be treated is arranged inside or outside the container main body, and the raw water is transferred from the raw water tank to the first treatment tank by a pump arranged in the raw water tank.

According to the invention described in claim 7, provided is the water purification apparatus using a wastewater treatment device according to claim 2, in which the first filtration device is configured to filter the treated water retained in the third treatment tank through injection of the treated water into a plurality of filter members.

### Advantageous Effects of Invention

According to the present invention, it is possible to provide the water purification apparatus using a wastewater treatment device, the water purification apparatus making use of characteristics of the wastewater treatment device, which is capable of dealing with various wastewaters such as a pre-painting treatment wastewater, a wastewater in a barrel process, a wastewater after an oxidation treatment of aluminum, a wastewater after a plating process, and a wastewater after a degreasing treatment performed in a semiconductor manufacturing device and can be installed and operated at a desired location within a short period of time at low cost as compared to related-art devices.

Further, according to the present invention, it is possible to provide the water purification apparatus using a wastewater treatment device, which allows reduction in size and cost of the apparatus and is capable of generating a sufficient amount of purified water with electric power supply means using natural energy, such as a solar panel or a wind power generator, without generating any useless wastewater.

### Brief Description of Drawings

FIG. 1 is a plan configuration view for illustrating a wastewater treatment device on which a water purification apparatus according to a first embodiment is based.
FIG. 2 is a front configuration view for illustrating the wastewater treatment device on which the water purification apparatus according to the first embodiment is based.
FIG. 3 is a sectional view taken along the line III-III of FIG. 1 as viewed in the direction of arrows.
FIG. 4 is a right side configuration view for illustrating the wastewater treatment device on which the water purification apparatus according to the first embodiment is based.
FIG. 5 is a sectional view taken along the line V-V of FIG. 1 as viewed in the direction of arrows.
FIG. 6 is an outside perspective view for illustrating a container main body.
FIG. 7 is a configuration diagram for illustrating pipelines in the wastewater treatment device on which the water purification apparatus according to the first embodiment is based.
FIG. 8 is a configuration view for illustrating a structure for retaining wastewater to be treated in a treatment tank in the wastewater treatment device on which the water purification apparatus according to the first embodiment is based.
FIG. 9(a) is a front configuration view for illustrating a treatment tank in the wastewater treatment device on which the water purification apparatus according to the first embodiment is based.
FIG. 9(b) is a plan configuration view for illustrating the treatment tank in the wastewater treatment device on which the water purification apparatus according to the first embodiment is based.
FIG. 10(a) is a perspective configuration view for illustrating rinse water storage tanks for storing wastewater to be treated in the wastewater treatment device on which the water purification apparatus according to the first embodiment is based.
FIG. 10(b) is a perspective configuration view for illustrating the rinse water storage tanks for storing the wastewater to be treated in the wastewater treatment device on which the water purification apparatus according to the first embodiment is based.
FIG. 11 is a plan configuration view for illustrating the water purification apparatus according to the first embodiment.
FIG. 12 is a front configuration view for illustrating the water purification apparatus according to the first embodiment.
FIG. 13 is a back configuration view for illustrating the water purification apparatus according to the first embodiment.
FIG. 14 is a plan configuration view for illustrating the water purification apparatus according to the first embodiment.
FIG. 15 is a configuration diagram for illustrating pipelines in the water purification apparatus according to the first embodiment.

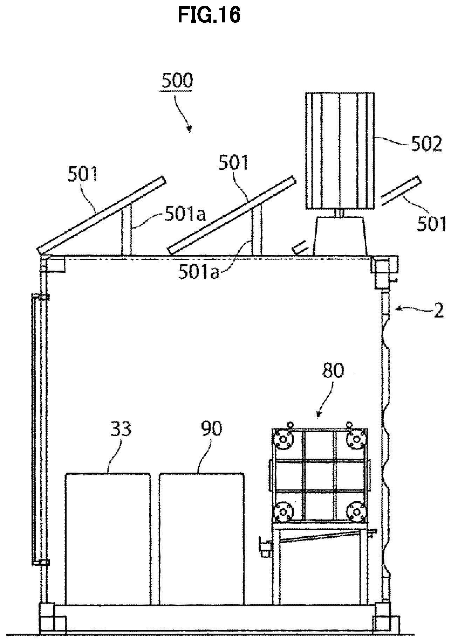

FIG. 16 is a right side configuration view for illustrating the water purification apparatus according to the first embodiment.

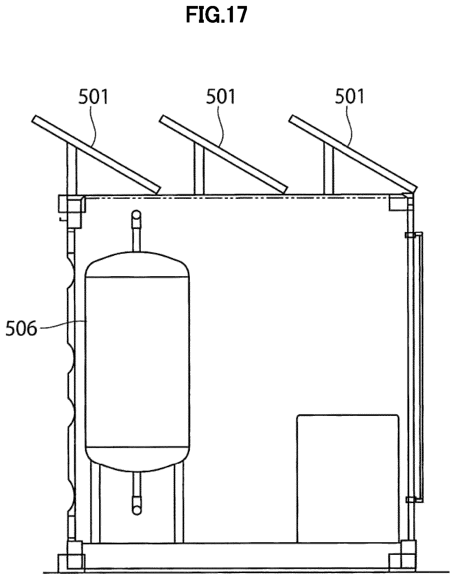

FIG. 17 is a left side configuration view for illustrating the water purification apparatus according to the first embodiment.

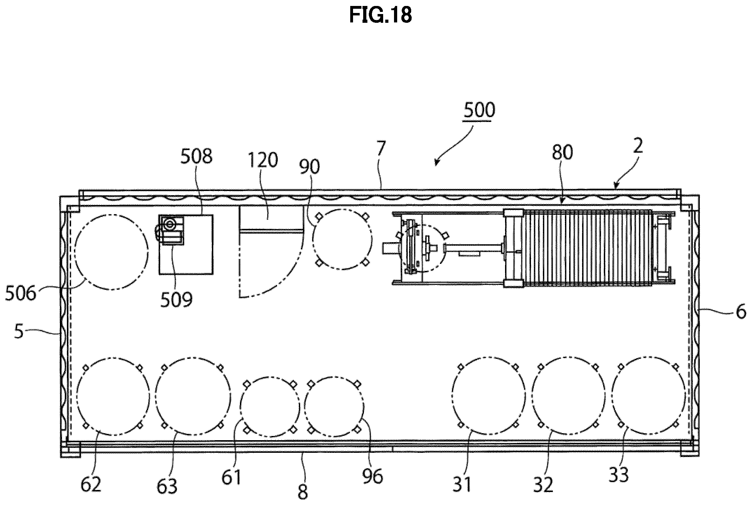

FIG. 18 is a plan configuration view for illustrating a modification example of the water purification apparatus according to the first embodiment.
FIG. 19 is a front configuration view for illustrating the modification example of the water purification apparatus according to the first embodiment.
FIG. 20 is a plan configuration view for illustrating a water purification apparatus according to a second embodiment.
FIG. 21 is a front configuration view for illustrating the water purification apparatus according to the second embodiment.
FIG. 22 is a back configuration view for illustrating the water purification apparatus according to the second embodiment.
FIG. 23 is a plan configuration view for illustrating the water purification apparatus according to the second embodiment.
FIG. 24 is a right side configuration view for illustrating the water purification apparatus according to the second embodiment.
FIG. 25 is a left side configuration view for illustrating the water purification apparatus according to the second embodiment.
FIG. 26 is a configuration diagram for illustrating pipelines in the water purification apparatus according to the second embodiment.
FIG. 27(a) is a configuration view for illustrating a water purification apparatus according to a third embodiment.
FIG. 27(b) is a configuration view for illustrating a water purification apparatus according to the third embodiment.
FIG. 28(a) is a configuration view for illustrating a water purification apparatus according to the third embodiment.
FIG. 28(b) is a configuration view for illustrating a water purification apparatus according to the third embodiment.
FIG. 29 is a plan configuration view for illustrating a water purification apparatus according to a fourth embodiment.

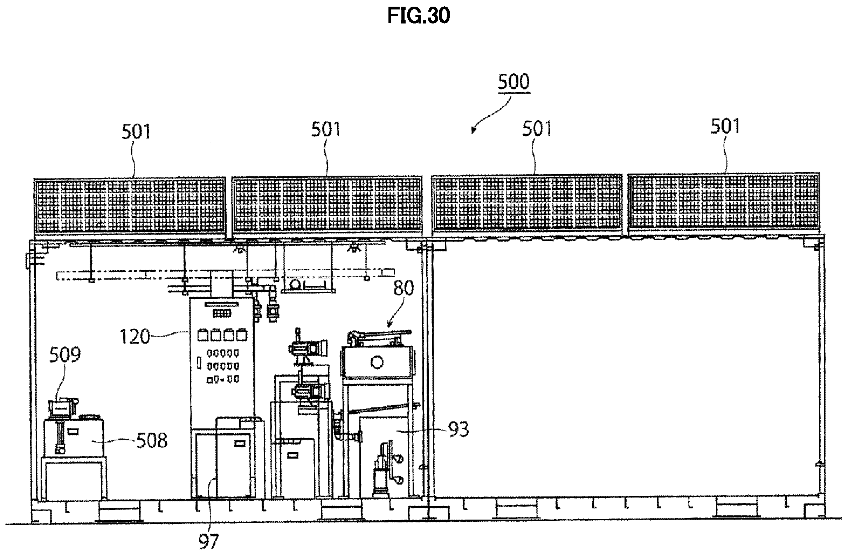

FIG. 30 is a front configuration view for illustrating the water purification apparatus according to the fourth embodiment.
FIG. 31 is a plan configuration view for illustrating the water purification apparatus according to the fourth embodiment.
FIG. 32 is a configuration diagram for illustrating pipelines in the water purification apparatus according to the fourth embodiment.
FIG. 33 is a front configuration view for illustrating a distillation device unit of the water purification apparatus according to the fourth embodiment.
FIG. 34 is a plan configuration view for illustrating the distillation device unit of the water purification apparatus according to the fourth embodiment.
FIG. 35 is a left side configuration view for illustrating the distillation device unit of the water purification apparatus according to the fourth embodiment.
FIG. 36 is a right side configuration view for illustrating the distillation device unit of the water purification apparatus according to the fourth embodiment.

### Description of Embodiments

Now, embodiments of the present invention are described with reference to the drawings.

### [First Embodiment]

Before a water purification apparatus according to a first embodiment of the present invention is described, a wastewater treatment device on which a configuration of the water purification apparatus is based is described.

Damage by a natural disaster such as a typhoon, a torrential rain, or an earthquake, which occurs under the influence of global warming, has been expanding, and lifelines have been frequently disrupted. For example, the interruption of electric power supply due to utility pole's fall caused by a typhoon or an earthquake, and the interruption of supply of tap water due to the breaking of a water pipe, which is caused by, for example, flooding over a road or inundation above or under floor level due to a torrential rain, or an earthquake, have occurred.

From the effect caused by an aboveground structure such as utility pole's fall on electric power supply, relatively early recovery can be expected. Meanwhile, once the supply of tap water is interrupted due to the breaking of a water pipe, which is caused by, for example, flooding over a road or inundation above or under floor level due to a torrential rain or an earthquake, it requires at least several days or, in the worst case, several weeks for the restoration of a water pipe being an underground structure. Thus, we have to rely on a tank car or the like for the supply of potable water. In particular, unlike electric power supply, the supply of potable water directly concerns human lives.

The wastewater treatment device made by the present inventor is mainly intended to treat various wastewaters (industrial wastewaters) such as a pre-painting treatment wastewater, a wastewater after a barrel process, a wastewater after an oxidation treatment of aluminum, a wastewater after a plating process, and a wastewater after a degreasing treatment performed in, for example, a semiconductor manufacturing device.

Meanwhile, unlike the industrial wastewaters, pollution is less serious in raw water such as water in rivers, lakes, and marshes and rainwater accumulated on the ground. Thus, a wastewater treatment device 1 can be used as a water purification apparatus by adding some components. Further, the wastewater treatment device is constructed based on a container main body, and hence can be moved to a desired location in, for example, a disaster-affected area by a track or the like so as to be quickly operated.

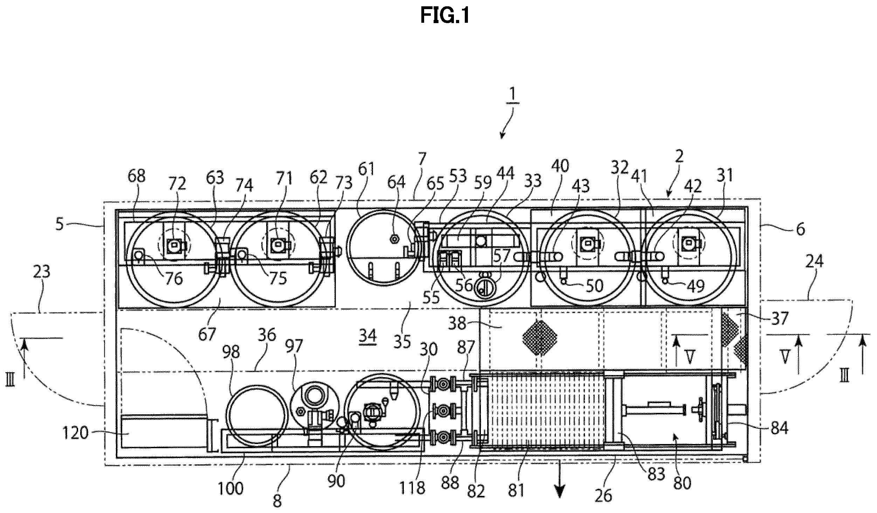

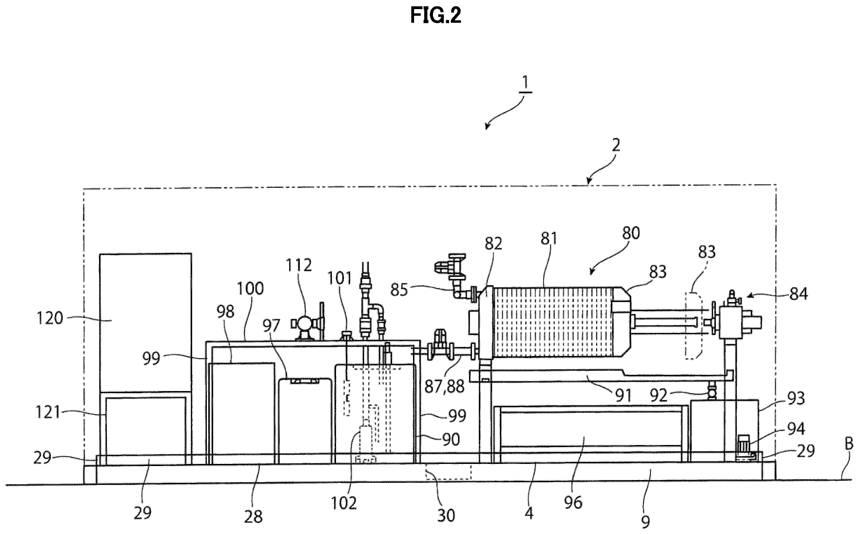

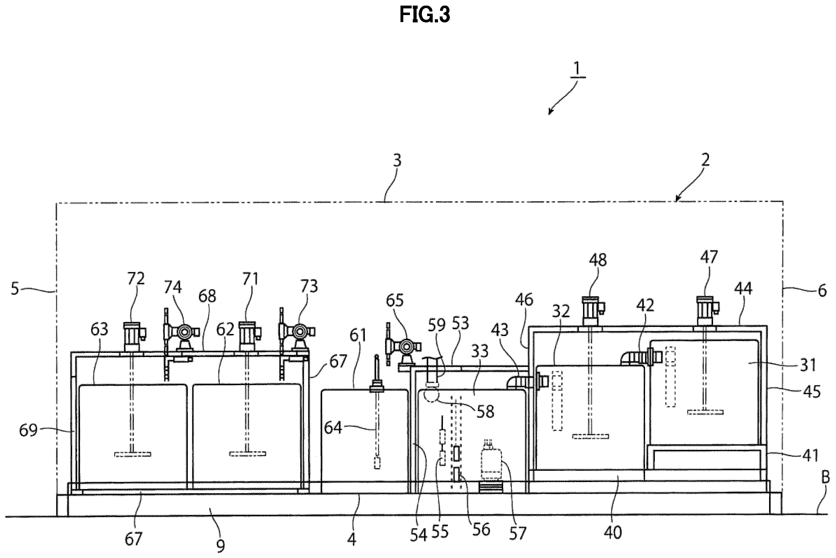

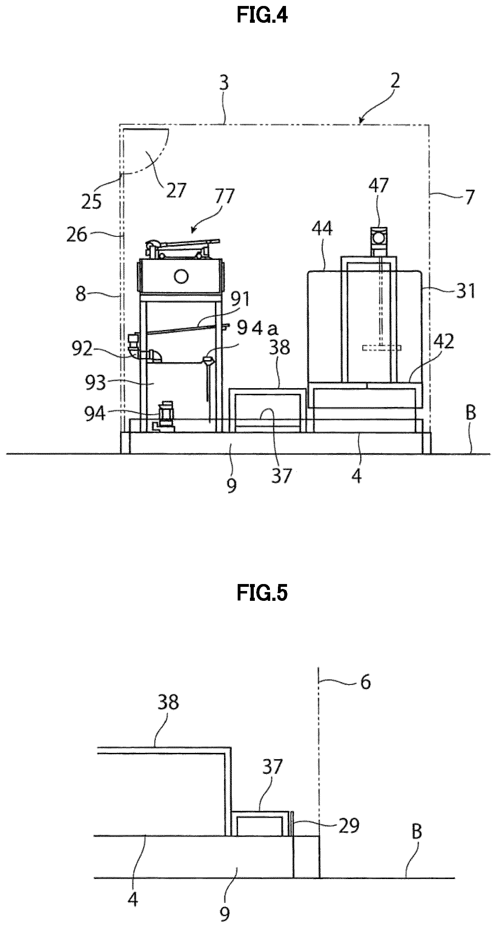

FIG. 1 to FIG. 5 are configuration views for illustrating the entirety of a wastewater treatment device on which the water purification apparatus according to the first embodiment of the present invention is based. FIG. 1 is a plan configuration view for illustrating the wastewater treatment device, FIG. 2 is a front configuration view for illustrating the wastewater treatment device, FIG. 3 is a sectional view taken along the line III-III of FIG. 1 as viewed in the direction of arrows, FIG. 4 is a right side configuration view for illustrating the wastewater treatment device, and FIG. 5 is a sectional view taken along the line V-V of FIG. 1 as viewed in the direction of arrows.

As illustrated in FIG. 1, the wastewater treatment device 1 according to a first embodiment includes a container main body 2, which conforms to ISO standards. This container main body 2 complies with, for example, the standard of 20 feet. Outer dimensions of the container main body 2 are set as: a length of 6,058 mm, a width of 2,438 mm, and a height of 2,591 mm.

The International Organization for Standardization (ISO) standardizes containers so as to enable the common use of transport infrastructure to ensure improved efficiency in transporting work. The containers conforming to the ISO standards have the same outer dimensions (external dimensions) regardless of which manufacturer the container is manufactured by. As the containers conforming to the ISO standards, containers of a plurality of sizes such as 20 feet and 40 feet are prepared. The container main body 2 is only required to have outer dimensions equal to those of the containers conforming to the ISO standards. The container main body 2 itself is not required to form a container itself. For example, the container main body 2 may be formed of a rectangular parallelepiped frame body having outer diameters equal to those of a container conforming to the ISO standards. Here, the IOS standards are described as one example of the standards. However, the standards usable in this embodiment are not limited thereto. A container conforming to JIS standards or the like may also be used.

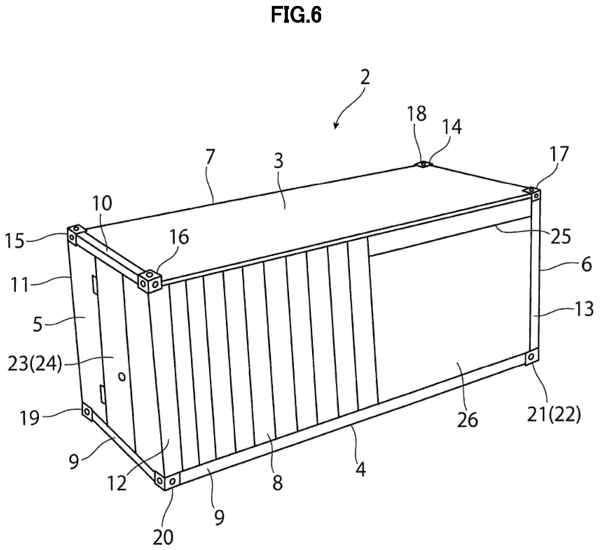

As illustrated in FIG. 6, the container main body 2 is formed into an elongated rectangular parallelepiped shape with a roof surface 3, a bottom surface 4, front and rear side surfaces 5 and 6, and left and right side surfaces 7 and 8. The front and rear side surfaces 5 and 6 extend in a longitudinal direction. The left and right side surfaces 7 and 8 extend in a width direction. The container main body 2 basically includes a frame body 9, a frame body 10, and four support columns 11 to 14. The frame body 9 has a rectangular shape in plan view, and is arranged around the bottom surface 4. The frame body 10 has a rectangular shape in plan view, and is arranged around the roof surface 3. The support columns 11 to 14 connect the frame body 9 arranged around the bottom surface 4 and the frame body 10 arranged around the roof surface 3 to each other at four corners. Not all the frame bodies 9 and 10 and the support columns 11 to 14 are necessarily required. The roof surface 3, the bottom surface 4, the side surface 5, 6, 7, or 8, or the like may have the function of another one of them. For example, the frame body 10 arranged around the roof surface 3 is not necessarily required. The roof surface 3 itself, which is formed of a steel plate such as a corrugated plate with unevenness having a rectangular shape in plan view and connects four support columns 11 to 14 to each other, may also serve as the frame body 10. Coupling portions 15 to 22 are provided at eight corners of the container main body 2. The coupling portions 15 to 22 are used to lift up the container main body 2 when the container main body 2 is to be transported or used to couple the container main body 2 to a container main body 2 (not shown) adjacent thereto in an up-and-down direction or a horizontal direction. The container main body 2 may be partially or entirely opened on the roof surface 3, the front and rear side surfaces 5 and 6, and the left and right side surfaces 7 and 8 except for the bottom surface 4. In addition to the bottom surface 4, the roof surface 3, the front and rear side surfaces 5 and 6, and the left and right side surfaces 7 and 8 may be all closed. In FIG. 6, for convenience, the reference symbol 22 for the coupling portion is indicated in brackets beside the coupling portion 21. Actually, the coupling portion 22 is arranged directly below the coupling portion 18. The container main body 2 is horizontally installed directly on a predetermined installation surface B (see FIG. 3) or on a foundation (not shown) provided on the installation surface B in the premises of a factory or the like. The installation surface B is leveled, or concrete or the like is placed thereon.

As illustrated in FIG. 1 and FIG. 6, the container main body 2 according to the first embodiment includes openable and closable doors 23 and 24 provided to the front and rear side surfaces 5 and 6. The openable and closable doors 23 and 24 allow a worker to enter and exit the container main body 2, and are provided so as to be openable and closable outwardly. It is apparent that the openable and closable doors 23 and 24 may be provided to one of the front and rear side surfaces 5 and 6 or the side surfaces 7 and 8. Further, the container main body 2 has an opening portion 25 with a width slightly shorter than half of a total length in the longitudinal direction. The opening portion 25 is formed in a part of the right side surface 8 on a far side (right side in FIG. 6) in the longitudinal direction. The opening portion 25 is formed so as to be openable and closable with a shutter 26, an openable and closable door or the like except for a part of an upper end portion. As illustrated in FIG. 4, a shutter box 27 for receiving the shutter 26 so that the shutter 26 is openable and closable is arranged on the inner side of an upper end portion of the opening portion 25.

As illustrated in FIG. 2 and FIG. 5, the container main body 2 has been subjected to a liquid leakage prevention process over a predetermined height including the bottom surface 4. A steel plate 28 for closing a top of the frame body 9 is laid entirely on the bottom surface 4 of the container main body 2 by means such as welding. The steel plate 28 positioned on a floor surface may form the bottom surface 4 itself of the container main body 2 or form only a floor surface independently of the bottom surface 4. In consideration of a configuration of the container main body 2 or the like, it is desired that the steel plate 28 positioned on the floor surface form the bottom surface 4 itself of the container main body 2.

A liquid leakage prevention wall 29 is provided around an outer periphery of the steel plate 28 positioned on the bottom surface 4 of the container main body 2 by means such as welding so as to have a rectangular frame-like shape in plan view. Similarly to the steel plate 28, the liquid leakage prevention wall 29 is formed of a steel plate or the like and is provided in an upright state with a predetermined height (for example, about 100 mm to about 250 mm) so as to surround the entire periphery of the steel plate 28. The bottom surface 4 of the container main body 2 is provided with a liquid leakage prevention function for the predetermined height by the steel plate 28 and the liquid leakage prevention wall 29. If wastewater or treated water leaks out from a reaction tank 31 described later or the like, the leaking wastewater or treated water is retained on the bottom surface 4 inside the liquid leakage prevention wall 29 and does not leak outside or pollute the premises or the installation surface B. Further, the bottom surface 4 itself of the container main body 2 has been subjected to the liquid leakage prevention process. Thus, unlike a case in which a general wastewater treatment facility (plant) is installed, liquid leakage prevention work is not required to be additionally performed around the outer periphery and the floor surface of a place where the container main body 2, which corresponds to the wastewater treatment device 1, is installed. Also in this regard, the wastewater treatment device 1 according to the first embodiment can easily be installed. The liquid leakage prevention function or an isolation function can be further enhanced for the bottom surface 4 of the container main body 2 by coating the steel plate 28 and an inner peripheral surface of the liquid leakage prevention wall 29 with a synthetic resin or the like.

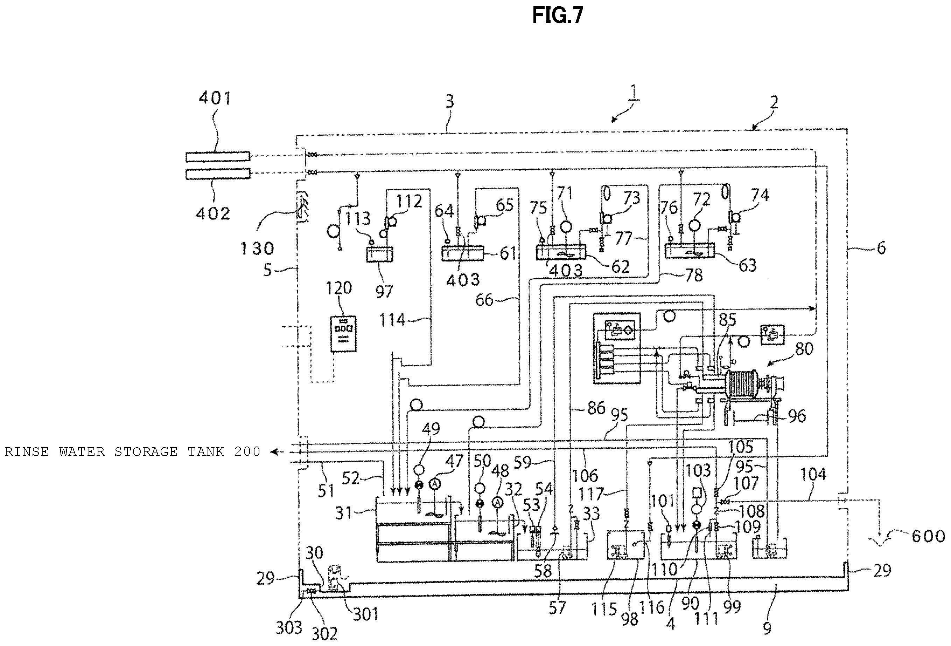

As illustrated in FIG. 1 and FIG. 2, a catch basin 30 having a recessed sectional shape for receiving the wastewater, the treated water or the like leaking out on the bottom surface 4 is formed in the bottom surface 4 of the container main body 2. The catch basin 30 is formed at a position closer to the right side surface 8 in a central area in the longitudinal direction. As illustrated in FIG. 7, the wastewater or the treated water received in the catch basin 30 can be discharged to a rinse water storage tank 200 or the like, which is installed outside, by being pumped up by a pump 301 or via a water discharge pipe 303 including a valve 302, which is provided to a side surface of the catch basin 30.

As illustrated in FIG. 1 and FIG. 3, a plurality of treatment tanks including at least the reaction tank 31, a neutralization tank 32, and a stock (storage) tank 33 are arranged inside the container main body 2 so that heights of liquid levels become lower in the stated order. The reaction tank 31 is one example of a first treatment tank into which wastewater to be treated is introduced. The neutralization tank 32 is one example of a second treatment tank into which the treated water that has been treated in the reaction tank 31 is introduced. The stock tank 33 is one example of a third treatment tank into which the treated water that has been treated in the neutralization tank 32 is introduced. The number of treatment tanks is not limited to three, and it is apparent that four or more treatment tanks may be arranged.

The description for the inside of the container main body 2 is continued. As illustrated in FIG. 1, a passage 34 serving as a corridor on which a worker moves is defined in a central area inside the container main body 2 in its width direction. The passage 34 extends over the entire length in the longitudinal direction so as to connect the front and rear openable and closable doors 23 and 24. Further, the interior of the container main body 2 is divided into a first treatment region 35 and a second treatment region 36, between which the passage 34 is located. The first treatment region 35 is positioned on one side (upper side in FIG. 1) in the width direction being a direction intersecting with the longitudinal direction. The second treatment region 36 is positioned on another side (lower side in FIG. 1) in the width direction.

As illustrated in FIG. 4 and FIG. 5, a step 37 and a work platform 38 are provided on the back side (right side in FIG. 1) of the container main body 2. The step 37 is an area on which a worker puts his/her feet as entering and exiting the container main body 2 through the openable and closable door 24. The work platform 38 is set higher than the step 37. The step 37 is set at a height equal to the height of the liquid leakage prevention wall 29. Further, the work platform 38 is set at a height significantly higher than that of the step 37 in accordance with heights of the reaction tank 31 and the neutralization tank 32. As illustrated in FIG. 1, the work platform 38 is arranged so as to extend in the longitudinal direction of the container main body 2 to a substantially central area in the vicinity of the stock tank 33.

As illustrated in FIG. 1 and FIG. 3, the reaction tank 31, the neutralization tank 32, and the stock tank 33 are provided in the first treatment region 35, which is the region on one side in the width direction, and are arranged in the stated order from a far-side end in the longitudinal direction inside the container main body 2. The reaction tank 31, into which the wastewater to be treated is introduced from an outside, the neutralization tank 32, into which the treated water that has been treated in the reaction tank 31 is introduced, and the stock tank 33, into which the treated water that has been treated in the neutralization tank 32 is introduced, are arranged adjacent to each other so as to be slightly spaced apart from each other.

In the first embodiment, the above-mentioned reaction tank 31, neutralization tank 32, and stock tank 33 are formed in the same manner. Each of the reaction tank 31, the neutralization tank 32, and the stock tank 33 is formed of a tank made of a synthetic resin, which has a bottomed cylindrical shape with an upper end surface being entirely or partially opened, or a tank made of metal, which has an inner peripheral surface coated with Teflon (trademark) or the like as needed. Capacities of the tanks 31 to 33 are set to, for example, the same value (500 L). When the capacities of the tanks 31 to 33, in particular, the reaction tank 31 and the neutralization tank 32 are set to the same value, the treatments of wastewater in the tanks can be continuously performed. Thus, such setting of the capacities is desirable. However, it is not necessarily required that the capacities of the tanks 31 to 33 be all set equal to each other. Further, the value of the capacities is not limited to 500 L. It is apparent that the capacities may be larger or smaller than 500 L in accordance with the amount of wastewater to be treated.

The capacities of the reaction tank 31, the neutralization tank 32, and the stock tank 33 depend on treatment capacity of the wastewater treatment device 1 per unit time. As the wastewater treatment device 1 according to the first embodiment, for example, three kinds of machines capable of treating 0.4 m³/hr, 1.0 m³/hr, and 2.0 m³/hr as the treatment capacity per unit time are prepared. The wastewater introduced into the reaction tank 31 is mixed with a predetermined chemical agent for a predetermined time period in the reaction tank 31 so as to be subjected to a reaction treatment as described later. Then, the wastewater is transferred into the neutralization tank 32 and is further mixed with a predetermined chemical agent for a predetermined time period so as to be neutralized. In the first embodiment, the treated water is transferred from the reaction tank 31 to the neutralization tank 32 by using a hydraulic head pressure generated by a difference in height. Thus, the amount of wastewater introduced into the reaction tank 31 per unit time determines the treatment capacity of the wastewater treatment device 1. Now, given that the treatment capacity of the wastewater treatment device 1 per unit time is 1.0 m³/hr, the reaction tank 31 having a capacity of 500 L becomes full in about 30 minutes and the treated water flows to the subsequent neutralization tank 32. Specifically, the wastewater introduced into the reaction tank 31 is retained in the reaction tank 31 for about 30 minutes to react with chemical agents. As described above, the wastewater introduced into the reaction tank 31 is subjected to a reaction treatment for the predetermined time period in the reaction tank 31 and then continuously flows into the subsequent neutralization tank 32.

As illustrated in FIG. 3, the reaction tank 31, the neutralization tank 32, and the stock tank 33 are arranged so that the heights of the liquid levels become lower in the stated order. As for the height of the liquid level in each of the tanks 31 to 33, given that the amounts of treated water to be contained therein are substantially equal to each other, a bottom surface of the reaction tank 31 is set at the highest position, a bottom surface of the neutralization tank 32 is set at a second highest position, and a bottom surface of the stock tank 33 is set at the lowest position in the first embodiment. The reaction tank 31 is arranged on a second support base 41 placed on a first support base 40 arranged on the bottom surface 4 of the container main body 2 so that a bottom surface of the reaction tank 31 is set at the highest position. Further, the neutralization tank 32 is arranged on the first support base 40 arranged on the bottom surface 4 of the container main body 2 so that a bottom surface of the neutralization tank 32 is set at the second highest position. In the first embodiment, a difference in height between the reaction tank 31 and the neutralization tank 32 is set larger than a difference in height between the neutralization tank 32 and the stock tank 33. The stock tank 33 is placed directly on the bottom surface 4 of the container main body 2 so that a bottom surface of the stock tank 33 is set at the lowest position. In this manner, the reaction tank 31, the neutralization tank 32, and the stock tank 33 are set so that the liquid levels have differences in height and become lower in the stated order under a state in which predetermined amounts of treated water are contained in accordance with the heights of the bottom surfaces.

The reaction tank 31, the neutralization tank 32, and the stock tank 33 are configured so that, for example, as described above, the treated water flows among the tanks 31 to 33 by using the hydraulic head pressure generated by differences in height among the liquid levels. Thus, drive means such as a pump is not basically required to cause the flow of treated water among the tanks 31 to 33, and thus energy saving can be achieved. However, the treated water may be transferred among the tanks 31 to 33 by using drive means such as a pump.

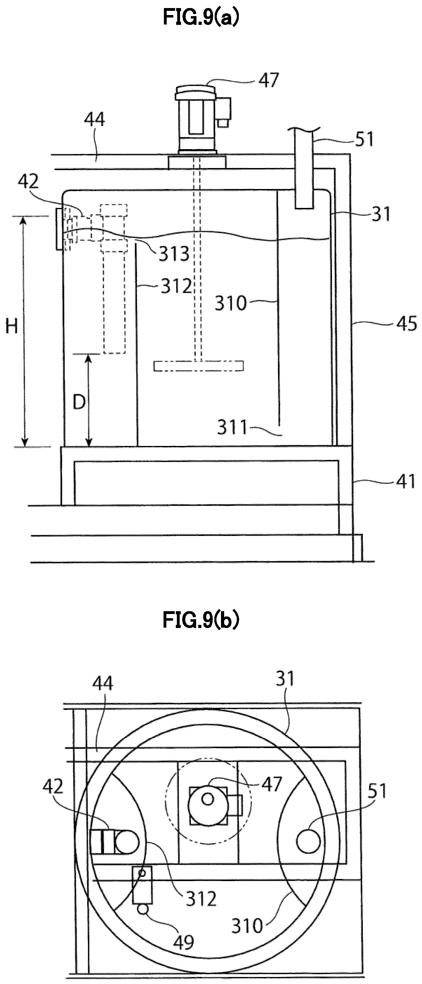

A first communication pipe 42 is arranged at a position close to the neutralization tank 32 on a side surface of an upper end portion of the reaction tank 31 so as to be positioned at a predetermined height H (see FIGS. 9). The treated water flows through the first communication pipe 42 from the reaction tank 31 to the neutralization tank 32 due to a hydraulic head pressure generated by a difference in height. Further, an end portion of the first communication pipe 42 on the reaction tank 31 side is arranged so as to be positioned at a predetermined depth D in the reaction tank 31. Further, an end portion of the first communication pipe 42 on the neutralization tank 32 side is arranged so as to face an opening portion at an upper end of the neutralization tank 32.

Thus, when the amount of treated water stored in the reaction tank 31 exceeds the height of the first communication pipe 42, the wastewater stored in the reaction tank 31 continuously flows from the reaction tank 31 into the neutralization tank 32 through the first communication pipe 42 due to a hydraulic head pressure generated by a difference in height. The transfer of the treated water from the reaction tank 31 into the neutralization tank 32 is basically performed so as to eliminate a difference in height between the liquid level in the reaction tank 31 and the liquid level in the neutralization tank 32. The wastewater treatment device 1 according to the first embodiment is configured to continuously treat the wastewater, and the heights of the liquid levels in the reaction tank 31 and the neutralization tank 32 are basically set so as to maintain a predetermined difference in height.

Similarly, a second communication pipe 43 is arranged at a position close to the stock tank 33 on a side surface of an upper end portion of the neutralization tank 32 so as to be positioned at a predetermined height H (see FIGS. 9). The treated water flows through the second communication pipe 43 from the neutralization tank 32 to the stock tank 33 due to a hydraulic head pressure generated by a difference in height. Further, an end portion of the second communication pipe 43 on the neutralization tank 32 side is arranged so as to be positioned at a predetermined depth D in the neutralization tank 32. Further, an end portion of the second communication pipe 43 on the stock tank 33 side is arranged so as to face an opening portion at an upper end of the stock tank 33.

Thus, when the amount of treated water stored in the neutralization tank 32 exceeds the height of the second communication pipe 43, the treated water stored in the neutralization tank 32 continuously flows from the neutralization tank 32 into the stock tank 33 through the second communication pipe 43 due to a hydraulic head pressure generated by a difference in height. The transfer of the treated water from the neutralization tank 32 into the stock tank 33 is basically performed so as to eliminate a difference in height between the liquid level in the neutralization tank 32 and the liquid level in the stock tank 33. The wastewater treatment device 1 according to the first embodiment is configured to continuously treat the wastewater, and the heights of the liquid levels in the neutralization tank 32 and the stock tank 33 are basically set so as to maintain a predetermined difference in height.

The wastewater treatment device 1 according to the first embodiment is configured to include the following retention means so that the treated water supplied to the reaction tank 31 and the neutralization tank 32 is retained in the reaction tank 31 and the neutralization tank 32 for given time periods. Here, the reaction tank 31 is described as an example. The neutralization tank 32 has the same configuration.

As illustrated in FIGS. 9, a first partition wall 310 is provided on an inflow side of the reaction tank 31 inside the reaction tank 31. The first partition wall 310 is curved and is provided to define the interior of the reaction tank 31 so as to prevent the treated water during reaction, which has already been supplied into the reaction tank 31, from being transferred to the neutralization tank 32 without being sufficiently mixed. A first communication hole 311 for communication with the interior of the reaction tank 31 is formed in a bottom portion of the first partition wall 310. The wastewater supplied into the reaction tank 31 stays inside the first partition wall 310, and then flows little by little into the reaction tank 31 through the first communication hole 311.

Similarly, a second partition wall 312 is provided on an outflow side of the reaction tank 31 inside the reaction tank 31. The second partition wall 312 is curved and is provided to define the interior of the reaction tank 31 so as to prevent the wastewater, which is just supplied into the reaction tank 31 and has not been sufficiently agitated or mixed with a chemical agent, from being immediately transferred to the neutralization tank 32. A second communication hole 313 for communication with the interior of the reaction tank 31 is formed in an upper end portion of the second partition wall 312. Further, an outflowside end portion of the first communication pipe 42 is arranged so as to be positioned at a predetermined depth D on the inner side of the second partition wall 312 in the reaction tank 31.

As a result, the wastewater supplied into the reaction tank 31 gradually moves downward inside the first partition wall 310, flows little by little into the reaction tank 31 through the first communication hole 311, and is sufficiently agitated by a first agitator 47 together with the treated water and chemical agents that have already been supplied into the reaction tank 31. After that, the treated water, which has been sufficiently agitated together with the chemical agents in the reaction tank 31, flows through the second communication hole 313 of the second partition wall 312 to move downward inside the second partition wall 312. The treated water, which has been mixed with the same amount of chemical agents as the amount of wastewater that has flowed into the reaction tank 31, is transferred to the neutralization tank 32 via the first communication pipe 42. Thus, the wastewater supplied into the reaction tank 31 is transferred to the neutralization tank 32 only after being retained inside the reaction tank 31 for a predetermined time period (for example, about 30 minutes) and, as described later, being sufficiently agitated and mixed with the chemical agents supplied into the reaction tank 31 so that the reaction treatment proceeds.

As illustrated in FIG. 1 and FIG. 3, a first support frame 44 having a rectangular shape in plan view is arranged in the horizontal direction so as to pass above the reaction tank 31 and the neutralization tank 32. The first support frame 44 has one leg portion 45 placed upright on the second support base 41 and another leg portion 46 placed upright on the first support base 40.

First and second agitators 47 and 48, and first and second PH sensors 49 and 50 (see FIG. 1) are mounted to the first support frame 44. The first and second agitators 47 and 48 are eccentrically arranged, and perform agitation inside the reaction tank 31 and the neutralization tank 32, respectively. The first and second PH sensors 49 and 50 detect PH of the treated water in the reaction tank 31 and the neutralization tank 32, respectively.

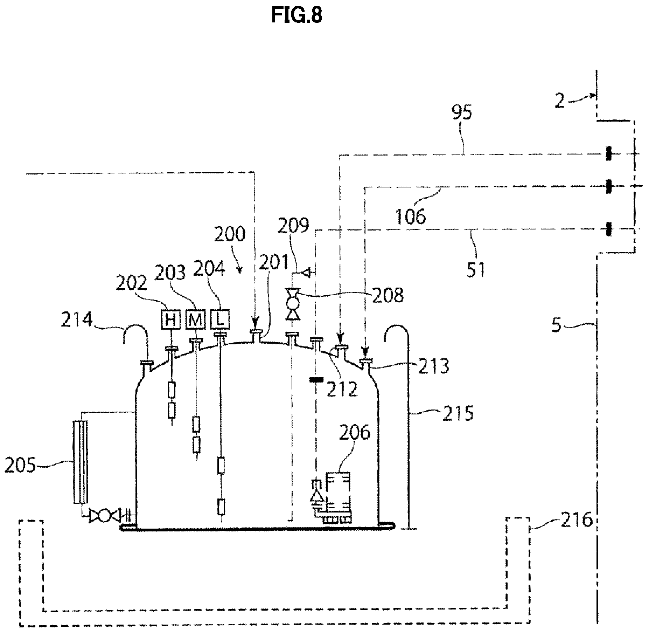

As illustrated in FIG. 7 and FIG. 8, the wastewater to be treated is supplied into the reaction tank 31 from the rinse water storage tank 200 described later via a supply pipeline 51. An on-off valve 52 (see FIG. 7) is mounted to a distal end portion of the supply pipeline 51.

Further, a second support frame 53 having a rectangular shape in plan view is arranged in the horizontal direction so as to pass above the stock tank 33. One end portion of the second support frame 53 is connected and fixed to the leg portion 46 of the first support frame 44, and another leg portion 54 is placed upright on the bottom surface 4.

First and second liquid level sensors 55 and 56 are mounted to the second support frame 53. The first and second liquid level sensors 55 and 56 detect a height of the liquid level in the stock tank 33 at two positions including a relatively high first position and a relatively low second position. Further, a first supply pump 57 is accommodated in the stock tank 33. The first supply pump 57 pumps up the treated water contained in the stock tank 33 and supplies the treated water to a filtration device 80 described later. Further, a reflux pipeline 59 is provided through an upper end portion of the stock tank 33. The reflux pipeline 59 has a mesh 58 (see FIG. 3) provided in its opening portion through which backwash water is refluxed from the filtration device 80.

When the height of the liquid level of the treated water contained in the stock tank 33 reaches a height detectable by the first liquid level sensor 55, the treated water is supplied to the filtration device 80 by driving the first supply pump 57. Then, when the height of the liquid level of the treated water contained in the stock tank 33 decreases to a height detectable by the second liquid level sensor 56, the driving of the first supply pump 57 is stopped to terminate the supply of the treated water to the filtration device 80.

Further, as illustrated in FIG. 1 and FIG. 3, inside the container main body 2, a sulfuric acid tank 61, an activated carbon tank 62, and a slaked lime tank 63 are provided in the first treatment region 35 being a region on one side in the width direction, and are arranged in the stated order from the central area in the longitudinal direction to another (left) end. The sulfuric acid tank 61 is one example of a first chemical agent tank that contains sulfuric acid at a predetermined concentration. The activated carbon tank 62 is one example of a second chemical agent tank that contains activated carbon being mixed and diffused in water. The slaked lime tank 63 is one example of a third chemical agent tank that contains slaked lime (calcium hydroxide: Ca(OH)₂) dissolved in water.

As first to fourth chemical agents to be contained in the first to third chemical agent tanks 61 to 63 and a fourth chemical agent tank 97 described later, a combination of sulfuric acid, activated carbon, slaked lime, and polyaluminum chloride (or polyferric sulfate or ferric chloride) is set as a standard unit. The use of the chemical agents of the standard unit allows a wastewater treatment to be performed for a pre-painting treatment wastewater, a wastewater in barrel polishing, a wastewater in an alumite treatment, a wastewater in molten zinc plating, a rinse water wastewater in degreasing and acid pickling steps or the like.

However, the kinds of chemical agents are not limited to those described above. When wastewater to be treated is a wastewater in plating including a gold cyanide plating step or the like, an oxidation treatment unit including sodium hypochlorite and caustic soda or the like may be used in addition to the standard unit. When wastewater to be treated is a wastewater in plating including a chromium plating step or the like, a reduction treatment unit including sodium bisulfite and sulfuric acid or the like may be used in addition to the standard unit.

The sulfuric acid tank 61 is formed of a tank having a covered and bottomed cylindrical shape. A third liquid level sensor 64 that detects a liquid level of sulfuric acid at a predetermined concentration stored in the sulfuric acid tank 61 is mounted to a lid body of the sulfuric acid tank 61. Further, a second supply pump 65 that supplies the sulfuric acid stored in the sulfuric acid tank 61 is mounted on the second support frame 53 adjacent to the sulfuric acid tank 61. A supply pipeline 66 (see FIG. 7) that allows supply of sulfuric acid into the reaction tank 31 is connected to a supply side of the second supply pump 65.

When a decrease in liquid level in the sulfuric acid tank 61 is detected by the third liquid level sensor 64, a warning notice about the decrease in liquid level is made. Then, sulfuric acid and dilution water are supplied into the sulfuric acid tank 61 by a worker.

As illustrated in FIG. 1 and FIG. 3, in the first embodiment, the activated carbon tank 62 and the slaked lime tank 63 have the same configuration. The activated carbon tank 62 and the slaked lime tank 63 are each formed of a tank made of a synthetic resin having a bottomed cylindrical shape with an entirely or partially opened upper end surface or a tank made of metal having a coated internal peripheral surface. Capacities of the tanks 62 and 63 are set, for example, equal (500 L) to each other. However, the capacities of the tanks 62 and 63 are not necessarily required to be set equal. Further, the values of the capacities are not limited to 500 L. It is apparent that the capacities may be larger or smaller than 500 L.

The activated carbon tank 62 and the slaked lime tank 63 are arranged at the same height through intermediation of a low rack 67 placed on the bottom surface 4 of the container main body **2.** As illustrated in FIG. 1 and FIG. 3, a third support frame 68 having a rectangular shape in plan view is arranged in the horizontal direction above the activated carbon tank 62 and the slaked lime tank 63. The third support frame 68 is provided so as to pass over the activated carbon tank 62 and the slaked lime tank 63. The third support frame 68 has leg portions 69 placed upright on the rack 67.

Third and fourth agitators 71 and 72, third and fourth supply pumps 73 and 74, and fifth and sixth liquid level sensors 75 and 76 are mounted to the third support frame 68. The third and fourth agitators 71 and 72 perform agitation inside the activated carbon tank 62 and the slaked lime tank 63. The third and fourth supply pumps 73 and 74 supply slaked lime and activated carbon stored in the activated carbon tank 62 and the slaked lime tank 63, respectively. The fifth and sixth liquid level sensors 75 and 76 detect heights of liquid levels in the activated carbon tank 62 and the slaked lime tank 63. Braided hoses 77 and 78 (see FIG. 7) that allow supply of activated carbon and slaked lime into the reaction tank 31 are connected to supply sides of the third and fourth supply pumps 73 and 74, respectively.

When a decrease in liquid level is detected in the activated carbon tank 62 and the slaked lime tank 63 by the fifth and sixth liquid level sensors 75 and 76, a warning notice about the decrease in liquid level is made. Then, activated carbon and slaked lime, and, in addition, dilution water are supplied to the activated carbon tank 62 and the slaked lime tank 63 by a worker.

Further, as illustrated in FIG. 1 and FIG. 2, the filtration device 80 as one example of first filtration means for filtrating the whole amount of treated water stored in the stock tank 33 is arranged in the second treatment region 36 being a region on another side in the width direction inside the container main body **2.** The filtration device 80 is arranged at a position opposed to the reaction tank 31, the neutralization tank 32, and the stock tank 33 across the passage 34.

As illustrated in FIG. 1, the filtration device 80 is formed so that a filter member 81 is held between a fixed board 82 and a movable board 83. The filter member 81 made of a special material is internally partitioned into a plurality of filtration chambers (for example, twenty-five chambers), and the treated water is injected thereinto. The movable board 83 can be moved to a cleaning position being separate from a filtration position by a moving mechanism 84. Just for additional information, in FIG. 1, there is illustrated a state in which the filter member 81 is located at the filtration position. A left end portion of the filter member 81 is not fixed to the fixed board 82, and another end portion (right end portion) thereof is connected to the movable board 83 so as to be movable in the horizontal direction.

The treated water contained in the stock tank 33 is introduced by the first supply pump 57 from a supply pipe 85 connected to an upper end portion of the filter member 81 on the fixed board 82 side into the filtration chambers of the filter member 81 via a supply pipeline 86. Under this state, the filter member 81 is in a filtrating state. The filtration includes filtration with a backwashing function. In this case, the reflux pipeline 59 (see FIG. 7) that allows refluxing of backwash water into the stock tank 33 is connected to the supply pipe 85.

Then, the filtration device 80 filters the whole amount of the treated water through the filtration chambers in the filter member 81 while continuously introducing the treated water into the filter member 81. As illustrated in FIG. 1 and FIG. 2, the treated water that has been filtered by the filter member 81 passes through the filter member 81 and is discharged from two water discharge pipes 87 and 88 provided to a lower part of one end portion into a treated water tank 90.

As illustrated in FIG. 2 and FIG. 4, a receiving plate 91 that receives drain leaking from the filter member 81 is arranged in an inclined state below the filter member 81. The drain dropping on the receiving plate 91 is collected in a drain tank 93 via a gutter portion 92 provided to a lower end portion of the receiving plate 91. A fourth supply pump 94 that supplies the collected drain into the rinse water storage tank 200 is accommodated in the drain tank 93. Further, as illustrated in FIG. 4, a liquid level sensor 94a that detects a liquid level of the collected drain is provided in the drain tank 93. When the liquid level sensor 94a detects that the liquid level of the drain in the drain tank 93 has reached a predetermined height, the drain stored in the drain tank 93 is returned by the fourth supply pump 94 into the rinse water storage tank 200 via a return pipeline 95 (see FIG. 7).

When a filtration operation is not being performed, sludge, which is a solid component in the treated water that has been filtered through the filter member 81 of the filtration device 80, is discharged onto a sludge pan 96 positioned therebelow by horizontally moving the filter member 81 in an opening direction at predetermined timing so as to open a discharge port (not shown) of the filter member 81. As described above, a filtration step series performed by the filtration device 80 is carried out in accordance with the height of the liquid level in the stock tank 33.

The sludge pan 96 is configured so as to be pulled out to the outside through the opening portion 25 (see FIG. 6) formed in the right side surface of the container main body 2 by a guide mechanism (not shown). When the sludge pan 96 is pulled out to the outside through the opening portion 25 of the container main body 2, the sludge received in the sludge pan 96 can easily be collected by a work vehicle such as a forklift.

The filtration device 80 including the filter member 81 arranged in the horizontal direction has been described. However, the arrangement of the filter member is not limited to that described above. The filter member 81 may be arranged in an up-and-down direction. However, in view of workability at a time of discharge of the sludge from the filter member 81 after the completion of filtration, it is desired that the filter member 81 be arranged in the horizontal direction.

As illustrated in FIG. 1 and FIG. 2, the treated water tank 90, a polyaluminum chloride (PAC) tank 97, and a backwash water tank 98 are arranged at positions adjacent to the filtration device 80 in the second treatment region 36 inside the container main body 2 so as to be adjacent to each other. The treated water tank 90 contains the treated water (treated wastewater) after being filtered by the filtration device 80 so as to discharge the treated water to the outside. The PAC tank 97 is one example of a fourth chemical agent tank, and contains PAC. In the backwash water tank 98, washing water for washing the filtration device 80 or the like is stored.

The sulfuric acid tank 61, the activated carbon tank 62, and the PAC tank 97 are all configured to supply the chemical agents contained therein to the reaction tank 31, and are arranged at positions in proximity to the reaction tank 31 as compared to the other tanks such as the slaked lime tank 63. Thus, lengths of pipelines that allow supply of the chemical agents from the sulfuric acid tank 61, the activated carbon tank 62, and the PAC tank 97 into the reaction tank 31 can be set relatively short.

As illustrated in FIG. 1 and FIG. 3, a fourth support frame 100 having a rectangular shape in plan view is arranged in the horizontal direction so as to pass over the treated water tank 90, the PAC tank 97, and the backwash water tank 98. The fourth support frame 100 has leg portions 69 placed upright on the bottom surface 4.

A seventh liquid level sensor 101, a discharge pump 102, a PH sensor 103, and a pipeline 104 for discharge are disposed to the fourth support frame 100. The seventh liquid level sensor 101 detects a height of a liquid level in the treated water tank 90. The discharge pump 102 is configured to discharge the treated water stored in the treated water tank 90 to the outside of the container main body 2. The PH sensor 103 detects PH and can record the detected PH value. The pipeline 104 for discharge allows the treated water after the treatment to be discharged to the outside by the discharge pump 102. The discharge pump 102 has a function to automatically perform switching between drive and stop in accordance with the height of the liquid level in the treated water tank 90, and maintains the height of the liquid level in the treated water tank 90 within a predetermined range. Further, the seventh liquid level sensor 101 issues a warning when detecting an abnormal rise in height of the liquid level in the treated water tank 90.

As illustrated in FIG. 7, the pipeline 104 for discharge is branched through intermediation of a valve 105. A pipeline 106 for feedback that allows the treated water to be returned to the rinse water storage tank 200 is connected to the pipeline 104 for discharge. When the PH of the treated water after the treatment, which has been detected by the PH sensor 103, is not equal to a predetermined reference value, a valve 107 provided to the pipeline 104 for discharge is closed so as to allow the treated water to be returned to the rinse water storage tank 200 via the pipeline 106 for feedback.

Further, the pipeline 104 for discharge is further branched on an upstream side of the pipeline 106 for feedback through intermediation of a check valve 108 and a valve 109. A return pipeline 111 including a valve 110, which allows the treated water in the treated water tank 90 to be returned into the treated water tank 90, is connected to the pipeline 104 for discharge.

Further, a fifth supply pump 112 and a liquid level sensor 113 are mounted to the fourth support frame 100. The fifth supply pump 112 supplies the PAC in the PAC tank 97 into the reaction tank 31. The liquid level sensor 113 detects a liquid level of the PAC contained in the PAC tank 97. A supply pipeline 114 (see FIG. 7) that allows the PAC to be supplied into the reaction tank 31 is connected to a supply side of the fifth supply pump 112.

Further, as illustrated in FIG. 7, a supply pump 115 and a supply faucet 116 are arranged on the backwash water tank 98. The supply pump 115 allows the washing water contained in the backwash water tank 98 to be supplied to the filtration device 80. The supply faucet 116 allows a given amount of washing water to be supplied through a pipeline 402 for water feeding and stored in the backwash water tank 98. A pipeline 117 that allows the washing water to be supplied to the filtration device 80 at predetermined timing via the supply pipeline 117 (see FIG. 7) is connected to the supply pump 115.

Further, a control operation panel 120 is provided at a corner adjacent to the backwash water tank 98 in the container main body 2. The control operation panel 120 is placed upright on a rack 121, and controls an operation and an electrical system of the wastewater treatment device 1.

The control operation panel 120 supplies electric power to members of the electrical system of the wastewater treatment device 1, and has a control function to control the operation of the wastewater treatment device 1 in accordance with a program (not shown) when a detection signal from various sensors is input.

The control operation panel 120 has a function to issue a warning or the like to a monitor room installed outside the container main body 2 when the detection signal from various sensors is not equal to a predetermined reference value, and outputs the detection signal from various sensors.

FIG. 7 is a system configuration diagram for illustrating a piping system and the electrical system of the wastewater treatment device 1 having the configuration described above. A pipeline 401 for compressed air and the pipeline 402 for water feeding are provided to a roof part or the like inside the container main body 2 of the wastewater treatment device 1. The pipeline 401 for compressed air allows compressed air to be supplied from an external compressor (not shown) or the like. The pipeline 402 for water feeding allows water to be used as dilution water or washing water to be supplied from an external water tap, a pump (not shown), or the like. On-off valves 403 are mounted to distal ends of branches of the pipeline 402 for water feeding, respectively.

In FIG. 7, the reference symbol 200 denotes the rinse water storage tank that is arranged outside the container main body 2 and stores the wastewater to be treated (hereinafter referred to as "rinse water"). The wastewater to be treated flows at a flow rate of, for example, 1 m³/hr into the rinse water storage tank 200 from a factory (not shown) or the like adjacent thereto through an inflow port 201. A kind of wastewater is not limited to any particular one. Examples of the wastewater are various wastewaters including: a pre-painting treatment wastewater such as a degreasing and rinsing water or a chemical rinse water after a degreasing treatment or a chemical treatment using acid or alkali is performed when a metal product or the like after having been subjected to mechanical processing or an assembly step is painted; a wastewater after a barrel polishing process of mixing and agitating polishing stones or a polisher and water with a product to be polished in a tank-type device; a wastewater after an alumite treatment (anodization treatment of aluminum); a wastewater after a plating process such as molten zinc plating; and a wastewater after a degreasing treatment and an acid pickling treatment with sulfuric acid, hydrochloric acid, or the like in a semiconductor manufacturing device or the like. Further, domestic wastewater or the like is not excluded as the kind of wastewater.

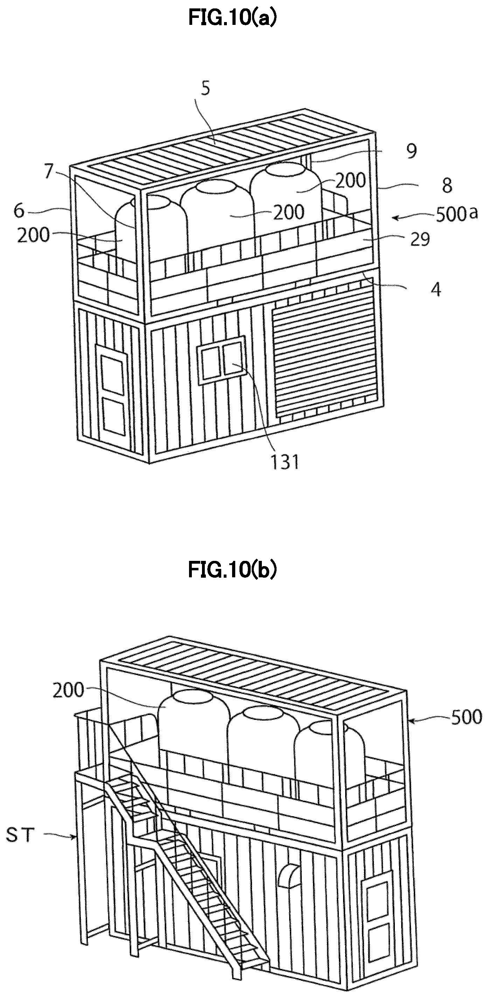

The location at which the rinse water storage tank 200 is arranged is not limited to the outside of the container main body 2. As illustrated in FIGS. 10, the rinse water storage tanks 200 may be arranged inside a container structural body 500 similar to the container main body 2 on a top of the container main body 2. In this case, the container main body 2 and the rinse water storage tanks 200 can be installed within a small installation area.

Similarly to the container main body 2, a container structural body 500a conforms to ISO standards for containers. The container structural body 500a has a 20-foot size, and its outer dimensions are set equal to those of the container main body 2. The container structural body 500 has a bottom surface, a roof surface, and four support columns 6 to 9 that connect the bottom surface and the roof surface to each other. Its side surfaces on the front, rear, left, and right sides are all opened. Similarly to the container main body 2, the container structural body 500 has the liquid leakage prevention wall 29 extending to a predetermined height (about 700 mm) including the bottom surface 4. In the illustrated example, three rinse water storage tanks 200 are installed on the bottom surface 4 of the container structural body 500a.

Stairs ST that allow a worker to go up to and down from the container structural body 500 is installed on a back side of the container structural body 500a.

In a factory in which the wastewater treatment device 1 according to the first embodiment is installed, one kind of wastewater is generally stored in the rinse water storage tanks 200. However, the wastewater to be stored is not limited to one kind, and two or three different kinds of wastewaters may be stored in the rinse water storage tanks 200 at different timings or on different days in accordance with treatment steps in the factory. In this case, the wastewaters stored in the rinse water storage tanks 200 may be stored in a plurality of rinse water storage tanks 200, 200, and so on, which are different from each other, in accordance with chemical properties of the wastewater. Here, one kind of wastewater shall be stored in the rinse water storage tanks 200.

As illustrated in FIG. 8, the rinse water storage tank 200 is provided with a plurality of liquid level sensors 202 to 204, a level gauge 205, and the like. The plurality of liquid level sensors 202 to 204 detect liquid levels (high, middle, low) of the wastewater contained in the rinse water storage tank 200. The level gauge 205 allows the height of the liquid level to be viewed from the outside. Further, a supply pump 206 is provided inside the rinse water storage tank 200. The supply pump 206 supplies the wastewater contained in the rinse water storage tank 200 into the reaction tank 31 provided in the container main body 2 via the supply pipeline 51. Part of the wastewater supplied by the supply pump 206 can be refluxed via a pipeline 209 branching from the supply pipeline 51, which has a valve 208.

Further, introduction ports 212 and 213 are formed in the rinse water storage tank 200. The introduction ports 212 and 213 allow the drain in the drain tank 93 and the treated water in the treated water tank 90 inside the container main body 2 to be introduced via pipelines 95 and 106 for introduction.

In FIG. 8, there are illustrated a deairing pipe 214, a ladder 215, and a liquid leakage prevention wall 216. The deairing pipe 214 allows air in the rinse water storage tank 200 to be discharged to the outside. The liquid leakage prevention wall 216 is arranged on the bottom surface and around a place where the rinse water storage tank 200 is installed.

Meanwhile, as illustrated in FIG. 7, the chemical agents in the sulfuric acid tank 61, the activated carbon tank 62, the slaked lime tank 63, the PAC tank 97, and the like can be fed into the reaction tank 31 arranged inside the container main body 2 via braided hoses or the pipelines 66, 77, 78, and 114 from the sulfuric acid tank 61, the activated carbon tank 62, the slaked lime tank 63, the PAC tank 97, and the like, respectively. Further, the first PH sensor 49 is arranged inside the reaction tank 31. The first PH sensor 49 detects PH of the treated water contained in the reaction tank 31.

Further, slaked lime can be fed into the neutralization tank 32 from the slaked lime tank 63 via the braided hose 78. Further, the second PH sensor 50 is arranged in the neutralization tank 32. The second PH sensor 50 detects PH of the treated water contained in the neutralization tank 32.

Further, liquid level sensors 53 and 54 and the pump 57 are arranged in the stock tank 33. The liquid level sensors 53 and 54 each detect a height of the liquid level. The pump 57 supplies the treated water stored in the stock tank 33 to the filtration device 80.

The liquid level sensor 64 and the pump 65 are arranged in the sulfuric acid tank 61. The liquid level sensor 64 detects a height of the liquid level. The pump 65 supplies the sulfuric acid stored in the sulfuric acid tank 61 to the reaction tank 31.

The liquid level sensor 75 and the pump 73 are arranged in the activated carbon tank 62. The liquid level sensor 75 detects a height of the liquid level. The pump 73 supplies the activated carbon stored in the activated carbon tank 62 to the reaction tank 31.

The liquid level sensor 76 and the pump 74 are arranged in the slaked lime tank 63. The liquid level sensor 76 detects a height of the liquid level. The pump 74 supplies the slaked lime stored in the slaked lime tank 63 to the neutralization tank 32.

As illustrated in FIG. 7, a ventilator 130 is arranged on an upper part of the container main body 2, and enables ventilation of the container main body 2. Further, as illustrated in FIGS. 10, side surfaces of the container main body 2 may appropriately have an openable and closable opening portion such as an openable and closable window 131. When the wastewater treatment device 1 including the container main body 2 and the like is installed in a cold area or the like, it is considered that the treated water may be frozen along with a decrease in outside air temperature. However, the freezing of the treated water or the like can be coped with by forming a space inside the container main body 2 as a closed space and providing a heating facility or the like as needed.

### <Operation of Wastewater Treatment Device>

The wastewater treatment device having the configuration described above can treat various wastewaters including: a pre-painting treatment wastewater; a wastewater in the barrel process; a wastewater after an oxidation treatment of aluminum; a wastewater after a plating process; and a wastewater after a degreasing treatment in a semiconductor manufacturing device or the like. In addition, the wastewater treatment device can be installed and operated at a desired location within a short period of time at low cost as compared to those in the related art.

Specifically, before the wastewater treatment device 1 according to the first embodiment is installed in premises of a factory (not shown) or the like, the kind and the number of treatment tanks to be arranged inside the container main body 2 or the kind and the number of chemical agent tanks that contain chemical agents are determined in advance in accordance with treatments for the wastewater, which are determined based on chemical properties of the wastewater to be treated that is discharged from the factory or the like, a treated amount per unit time, and the like.

As illustrated in FIG. 1 to FIG. 5, the wastewater treatment device 1 according to the first embodiment is assembled in a factory that manufactures the wastewater treatment device 1 based on the container main body 2 conforming to the ISO standards.

As illustrated in FIG. 2, in the container main body 2, the steel plate 28 is laid entirely over the bottom surface 4, and the liquid leakage prevention wall 29 is formed along the outer periphery of the steel plate 28 so as to perform a liquid leakage prevention process. Further, as illustrated in FIG. 6, the container main body 2 is provided with the openable and closable doors 23 and 24, the opening portion 25, and an exterior member such as the shutter 26 that opens and closes the opening portion 25. The step 37 and the work platform 38, which form the passage 34, are installed inside the container main body 2. Further, the first to fourth racks 44, 53, 68, and 100 and the like are mounted in the first and second regions 35 and 36 inside the container main body 2.

Further, as illustrated in FIG. 1 to FIG. 3, in accordance with the chemical properties of the wastewater to be treated, tanks forming the treatment tanks and the chemical agent tanks such as the reaction tank 31, the neutralization tank 32, the stock tank 33, the sulfuric acid tank 61, the activated carbon tank 62, the slaked lime tank 63, the treated water tank 90, the PAC tank 97, and the backwash water tank 98 are carried into the container main body 2, and are installed and fixed at predetermined positions.

Predetermined chemical agents may be contained in advance in the chemical agent tanks such as the sulfuric acid tank 61, the activated carbon tank 62, the slaked lime tank 63, and the PAC tank 97. However, in consideration of liquid leakage due to vibration occurring at a time of transportation of the container main body 2 or the like, it is desired that predetermined chemical agents be contained in the chemical agent tanks after the installation of the chemical agent tanks.

Further, as illustrated in FIG. 7, predetermined sensors, supply pumps, and the like are mounted to the treatment tanks and the chemical agent tanks such as the reaction tank 31, the neutralization tank 32, the stock tank 33, the sulfuric acid tank 61, the treated water tank 90, the PAC tank 97, and the backwash water tank 98.

Further, as illustrated in FIG. 1 and FIG. 2, the filtration device 80 is carried into the container main body 2 through the opening portion 25 and is installed therein.

In the above-mentioned manner, the assembly (manufacturing) step for the wastewater treatment device 1 is completed in advance not on site where the wastewater treatment device 1 is to be installed but in the manufacturing factory for the wastewater treatment device 1.

After that, as illustrated in FIG. 2, the container main body 2 of the wastewater treatment device 1 is transported to an installation location by transportation means such as a trailer (not shown), and is lifted up by a crane or the like to be installed on the predetermined installation surface B.

Further, as illustrated in FIG. 7, after the installation of the container main body 2, the electrical system and a signal system are connected to the container main body 2, and a water feed system is also connected thereto.

As illustrated in FIGS. 10, the rinse water storage tanks 200 of the container structural body 500a are arranged on the top of the container main body 2. In FIGS. 10, the stairs S are illustrated.

Further, besides the rinse water storage tanks 200 arranged on the top of the container main body 2, the rinse water storage tanks 200 that contain the treated water to be treated are also arranged at a location adjacent to the container main body 2 as illustrated in FIGS. 10. When the amount of wastewater to be treated is significantly small, the wastewater to be treated may be directly introduced into the reaction tank 31 without passing through the rinse water storage tank 200.

The wastewater introduced from the rinse water storage tank into the reaction tank 31 is, for example, wastewater containing microparticles such as iron powder after the barrel process in a mixed manner. Further, examples of the wastewater introduced from the rinse water storage tank 200 into the reaction tank 31 include a wastewater after an acid pickling treatment with sulfuric acid or the like before a painting process is performed on a steel plate. This wastewater is highly acidic, and is water containing iron ions, sulfuric acid, and the like. Further, examples of the wastewater introduced from the rinse water storage tank 200 into the reaction tank 31 include water in which aluminum is dissolved after the oxidation treatment of aluminum and water in which a heavy metal such as copper, zinc, or nickel is dissolved after a plating process.

Here, wastewater containing microparticles such as iron powder after the barrel process in a mixed manner is described as an example of the wastewater introduced from the rinse water storage tank 200 into the reaction tank 31.

As illustrated in FIG. 3, an appropriate amount of sulfuric acid at a predetermined concentration is supplied from the sulfuric acid tank 61 into the reaction tank 31 into which the wastewater has been introduced from the rinse water storage tank 200, and then undissolved metal powder such as iron powder is dissolved.

Thereafter or simultaneously, as illustrated in FIG. 7, activated carbon from the activated carbon tank 62 and PAC from the PAC tank 97 are supplied into the reaction tank 31, and are agitated by the first agitator 47 for a predetermined time period (about 30 minutes) to cause a reaction process.

As illustrated in FIG. 3 and FIG. 8, after elapse of a predetermined time period in the reaction tank 31, the wastewater contained in the reaction tank 31 is transferred into the neutralization tank 32 via the first communication pipe 42. Slaked lime is supplied from the slaked lime tank 63 to the treated water supplied into the neutralization tank 32 so as to be neutralized. It is apparent that this neutralization treatment may completely neutralize the treated water supplied into the neutralization tank 32. However, the neutralization treatment is only required to reduce an acidity of the treated water supplied into the neutralization tank 32 so as to achieve such a degree of neutralized state that the wastewater can be properly treated as common wastewater.

The treated water contained in the neutralization tank 32 is agitated by the second agitator 48, and PH thereof is detected by the PH sensor 50. Slaked lime is appropriately supplied from the slaked lime tank 63 to neutralize the treated water so that the PH falls within a predetermined range.

Next, after elapse of a predetermined time period in the neutralization tank 32, the treated water, which has been subjected to a neutralization treatment in the neutralization tank 32, is transferred to the stock tank 33 via the second communication pipe 43.

The iron ions that have been neutralized by alkali neutralization in the neutralization tank 32 are turned into a hydroxide of iron to be separated from water in the stock tank 33. The hydroxide of iron is mixed with activated carbon and PAC, and is adsorbed to be solidified. The treated water in which the hydroxide of iron or the like is separated from water to be solidified in the stock tank 33 is supplied to the filtration device 80 by the third supply pump 57.

A solidified component is separated and removed by the filter member 81 in the filtration device 80. The treated water after filtration is received in the treated water tank 90, and is discharged into a public catch basin 600 or the like as common wastewater by the pump 102 arranged in the treated water tank 90 to thereby complete a wastewater treatment step.

After the operation for a given time period and at a time other than during the filtration operation, the filtration device 80 removes sludge being a solidified component accumulated in the filter member 81.

As described above, the wastewater treatment device 1 according to the first embodiment includes the container main body 2 conforming to the ISO standards. The reaction tank 31, the neutralization tank 32, the stock tank 33, the chemical agent tanks including the sulfuric acid tank 61, the activated carbon tank 62, the slaked lime tank 63, and the PAC tank 97, and the like are arranged inside the container main body 2. After a predetermined neutralization and coagulation process is performed, filtration is performed by the filtration device 80.

Thus, unlike in related-art wastewater treatment facilities (plants), in the wastewater treatment device 1 according to the first embodiment, the treatment tanks such as the reaction tank 31 and the neutralization tank 32, the chemical agent tanks, or the like are not required to be installed after a liquid leakage prevention wall or the like is constructed at a location where the wastewater treatment facility is to be installed. Thus, the wastewater treatment device 1 can be installed and operated within a significantly shorter construction period than that in the related art.

Further, when the chemical agents of the standard unit are used or when chemical agents of a reduction process unit, chemical agents of an oxidation treatment unit or the like are used together with the chemical agents of the standard unit as the chemical agents, the wastewater treatment device 1 according to the first embodiment can deal with various wastewaters including a pre-painting treatment wastewater, a wastewater in the barrel process, or a wastewater after an oxidation treatment of aluminum, a wastewater after a plating process, and a wastewater after a degreasing treatment in a semiconductor manufacturing device.

A water purification apparatus according to the first embodiment is based on the above-mentioned configuration of the wastewater treatment device 1.

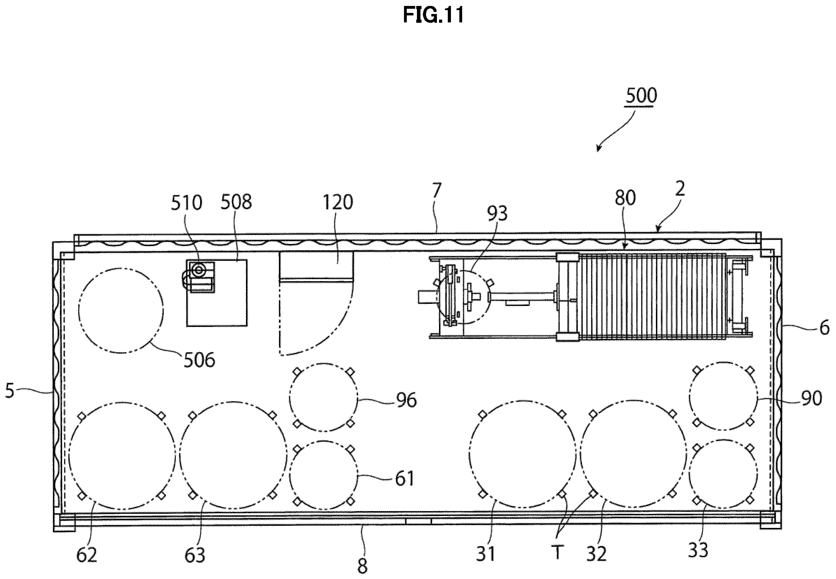

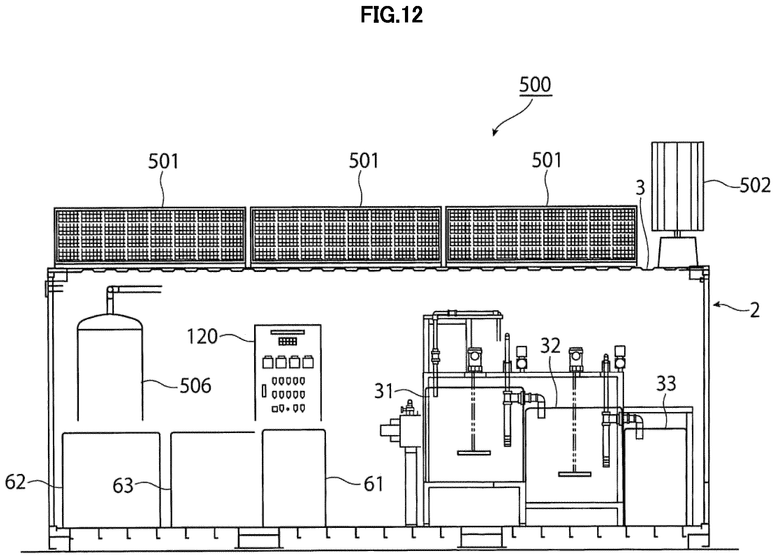

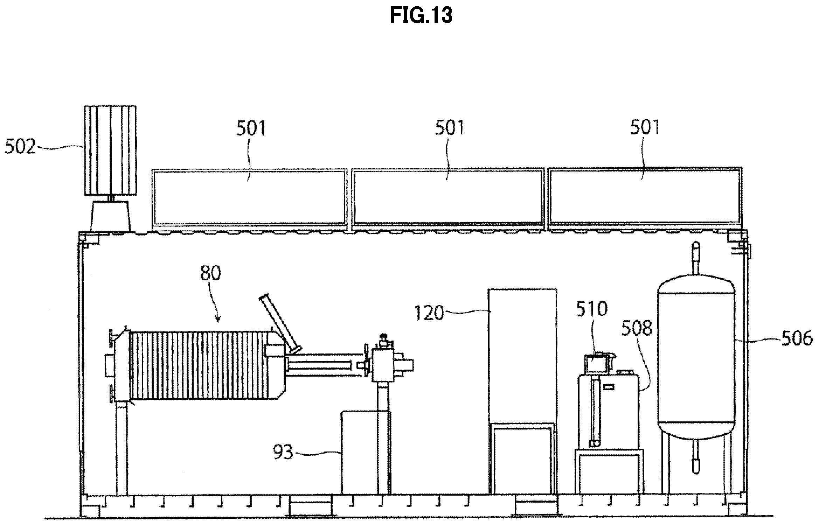

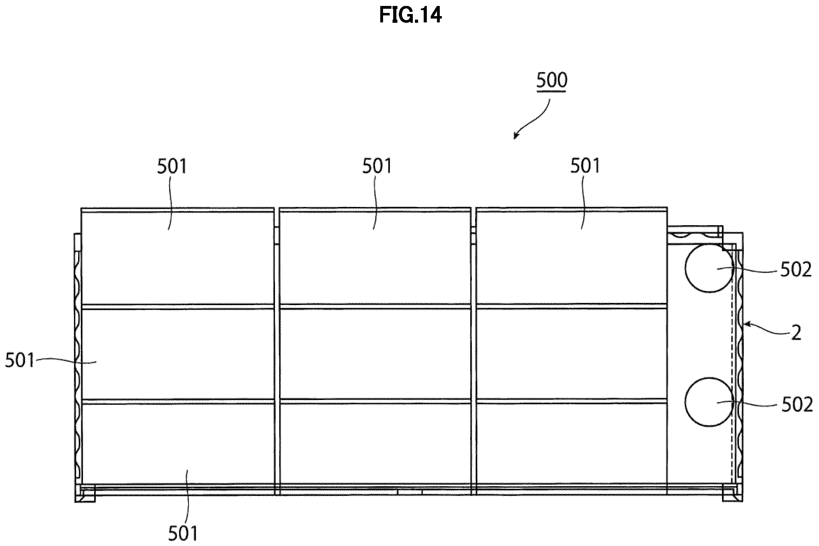

FIG. 11 to FIG. 14 are configuration views for illustrating the entirety of the water purification apparatus according to the first embodiment of the present invention. FIG. 11 is a plan configuration view for illustrating the water purification apparatus, FIG. 12 is a front configuration view for illustrating the water purification apparatus, FIG. 13 is a back configuration view for illustrating the water purification apparatus, and FIG. 14 is a plan configuration view for illustrating the water purification apparatus. In the description, the same components as those of the wastewater treatment device 1 are denoted by the same reference symbols.

As illustrated in FIG. 11, a water purification apparatus 500 includes the container main body 2, which conforms to ISO standards. This container main body 2 complies with, for example, the standard of 20 feet. Outer dimensions of the container main body 2 are set as: a length of 6,058 mm, a width of 2,438 mm, and a height of 2,591 mm.

As illustrated in FIG. 12 to FIG. 14, the container main body 2 includes electric power supply means for supplying electric power to the water purification apparatus 500. The electric power supply means is provided on a top of the roof surface 3, and is formed of at least one of solar panels or a wind power generator. As described above, the water purification apparatus 500 according to the first embodiment can be operated with, for example, a pump for moving raw water or treated water as one example of wastewater to be treated, and a motor for driving an agitator that performs agitation in the reaction tank 31, the neutralization tank 32, or the like. Thus, unlike a water purification apparatus using an RO film, a high-pressure pump or the like is not required to be used therein. Thus, the water purification apparatus 500 includes only a general-purpose pump with low electric power consumption. Thus, the water purification apparatus 500 has water purification capacity of about 0.5 kWh/m³, which can be achieved with electric power supplied from the solar panels or the wind power generator installed on the container main body 2. However, it is apparent that the water purification apparatus 500 according to the first embodiment may use electric power supplied from a power generator or the outside.

In the first embodiment illustrated in FIG. 12 to FIG. 14, nine solar panels 501, 501, and so on and two wind power generators 502, 502 are arranged on the top of the roof surface 3 of the container main body 2. The solar panels 501, 501, and so on are each formed into a rectangular shape in plan view with a length of 1,000 mm and a width of 1,750 mm. The solar panels 501, 501, and so on are each supported by a support column 501a on its back surface, and are each arranged, for example, to face due south so as to form an inclination angle of 30 degrees, which is a most desirable angle. The solar panels 501, 501, and so on are arranged in a fixed manner on the top of the roof surface 3 of the container main body 2. Thus, the front and rear side walls 5 and 6 of the container main body 2 are installed so as to face in an east-west direction. As a result, the solar panels 501, 501, and so on are arranged so as to face due south. The solar panels 501, 501, and so on have power generation capacity of, for example, from about 100 W to about 300 W per square meter under favorable conditions. Further, the wind power generator 502 generates electricity of, for example, from about 200 W to about 400 W per hr although it depends on wind strength. The electric power generated by the solar panels 501, 501, and so on and the wind power generators 502, 502 is accumulated in an electric storage device (not shown) installed inside the container main body 2, and is used to drive or control a required device through intermediation of a converter (not shown) as needed.

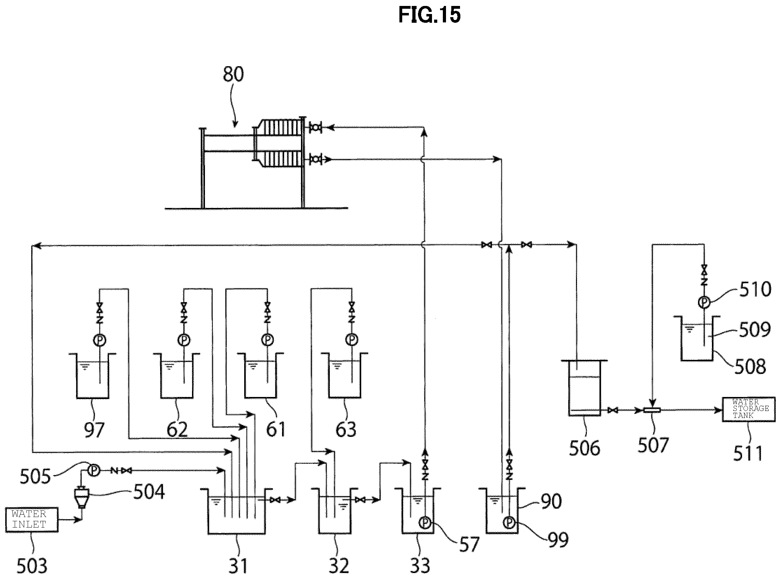

As illustrated in FIG. 15, raw water to be turned into potable water by the water purification apparatus 500 is introduced through a water inlet 503 and is separated into liquid and solid by a cyclone centrifugal separator 504 being one example of foreign matter removal means so that foreign matter such as solid matter is removed. It is apparent that the cyclone centrifugal separator 504 may be arranged inside the container main body 2. In the embodiment illustrated in FIG. 15, the cyclone centrifugal separator 504 is arranged outside the container main body 2. Foreign matter such as solid matter, which has been removed by the cyclone centrifugal separator 504, is directly discharged from the water inlet 503 or is received at a reception part provided outside the container main body 2. As the raw water, for example, water in rivers, lakes, and marshes, seawater, rainwater accumulated on the ground, or the like is used. However, the raw water is not limited to those described above, and may be groundwater, domestic wastewater, or the like.

The raw water, from which the foreign matter has been removed by the centrifugal separator 504, is supplied into the reaction tank 31 by a pump 505.

Then, after the raw water supplied into the reaction tank 31 reacts with various chemical agents to be treated in the reaction tank 31 as described above, the raw water is sent to the neutralization tank 32 so as to be neutralized. The treated water, which has been subjected to a neutralization treatment in the neutralization tank 32, is stored in the stock tank 33. Treatment time in each of the reaction tank 31, the neutralization tank 32, and the stock tank 33 is about 15 minutes. The treated water stored in the stock tank 33 is sent by the pump 57 to the first filtration device 80 in which a filtration process for separating sludge solidified with the chemical agents is performed. The first filtration device 80 includes the plurality of filter chambers, and can be continuously operated to continuously filter the treated water.

In the first embodiment, tanks, each having a capacity of 500 L, are used as the reaction tank 31 and the neutralization tank 32, and a tank having a capacity of 200 L is used as the stock tank 33. Further, tanks, each having a capacity of 500 L, are used as the activated carbon tank 62 and the slaked lime tank 63 that contain chemical agents to be supplied to the reaction tank 31, and a tank having a capacity of 200 L is used as the sulfuric acid tank 61. In FIG. 11, there are illustrated fixing members T for fixing lower end portions of the reaction tank 31, the neutralization tank 32, and the like.

The treated water, which has been subjected to the filtering process by the first filtration device 80, is temporarily stored in the treated water tank 90. After that, the treated water stored in the treated water tank 90 is sent by a pump 99 to a sand filtration tank 506 being one example of second filtration means so as to be subjected to sand filtration. The sand filtration tank 506 contains a filtering medium such as filtration sand, gravel, or an activator in a filtration tank main body formed into a cylindrical shape. The sand filtration tank 506 has treatment capacity of, for example, 3 m³ per hr.

The treated water, which has passed through the sand filtration tank 506 and has been subjected to a water purification treatment, is mixed with a disinfectant 509 contained in a disinfectant tank 508 by a line mixer 507 being one example of mixing means, and is sent as potable water to a water storage tank 511 and stored therein. The disinfectant 509 in the disinfectant tank 508 is supplied to the line mixer 507 by a pump 510. As one example of the disinfectant 509, sodium hypochlorite at a required concentration for potable water, which contains chlorine, is used. Sodium hypochlorite sterilizes and disinfects microbes in the treated water, which has passed through the sand filtration tank 506 and has been subjected to the water purification treatment, with a strong oxidation action of chlorine.

As described above, after the water purification apparatus 500 having the configuration described above introduces the raw water to be turned into potable water and removes foreign matter being solid, acid, alkali, dissolved metal, or the like is removed through the same step as that carried out in the wastewater treatment device 1 and a water purification treatment is performed. After that, the treated water, which has been subjected to the water purification treatment, is subjected to sand filtration in the sand filtration tank 506 to be turned into potable water, and is disinfected with a disinfectant such as sodium hypochlorite used for potable water. The disinfected water is stored in the water storage tank 511 as safe potable water and is provided for drinking.

In the water purification apparatus 500 according to the first embodiment, a reaction with the chemical agents is caused in the reaction tank 31, and solid-liquid separation after coagulation is performed by the first filtration device 80. Thus, the first filtration device 80 is small-sized and space-saving, and can be continuously operated. The amount of use of raw water and the amount of production of purified water are substantially equal to each other.

Further, the water purification apparatus 500 according to the first embodiment can transfer the raw water and the treated water by using only a general-purpose pump with low electric power consumption. The consumption electrode is about 0.5 kWh/m³. The amount of water, which is produced for one day by using electric power supply means using natural energy, such as solar panels, exceeds 5 m³.

Further, reaction time in each of the reaction tank 31, the neutralization tank 32, and the stock tank 33 is only required to be as short as about 15 minutes, and thus the water purification apparatus 500 according to the first embodiment can be started up within one hr including filtration time.

Further, the water purification apparatus 500 according to the first embodiment can include pumps and agitators, each with low electric power consumption. As an inverter, a breaker, a power line, and the like, general-use small-sized ones can be selected. Thus, all the above-mentioned components can be accommodated in a control panel, and hence cost of the water purification apparatus as a whole is relatively reduced.

Further, the water purification apparatus 500 according to the first embodiment includes the foreign matter removal means formed of a cyclone centrifugal separator or the like, which is used when the raw water is pumped up, and hence a load of the water treatment in subsequent stages can be reduced. After that, muddy soil is condensed and dehydrated by the first filtration device 80 in the water purification apparatus 1. Thus, ancillary facilities are not required. The muddy soil has been turned into a solid content at a water content ratio of about 70%, which can be incinerated. Thus, both of disposal cost and waste storage cost are low, and hence the cost of the apparatus can be reduced.

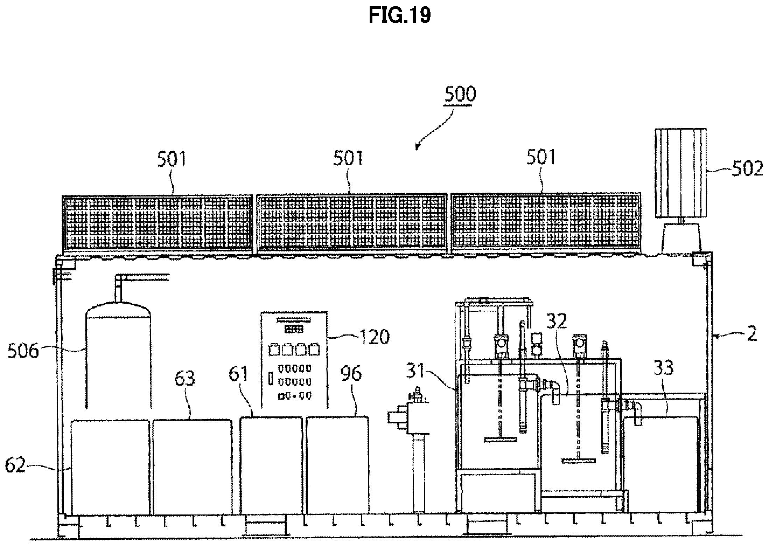

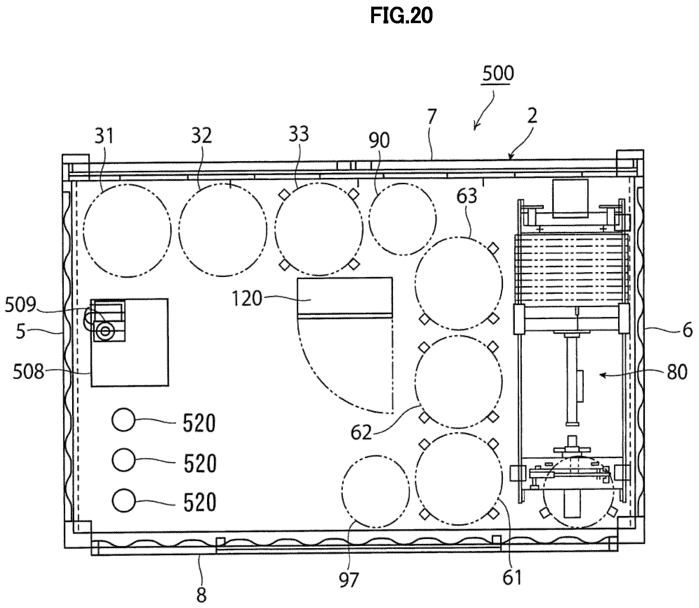

For the water purification apparatus 500 according to the first embodiment, which is illustrated in FIG. 11 and the like, the use of tanks, each having a relatively large capacity, as the reaction tank 31 and the neutralization tank 32, or the activated carbon tank 62 and the slaked lime tank 63 has been described. However, the tanks are not limited to those described above. As illustrated in FIG. 19 and FIG. 20, tanks, each having a relatively small capacity of about 300 L, may be used as the reaction tank 31, the neutralization tank 32, the activated carbon tank 62, the slaked lime tank 63, and the like. In this case, the treated water tank 90 is arranged between the first filtration device 80 and the control operation panel 120.

### [Second Embodiment]

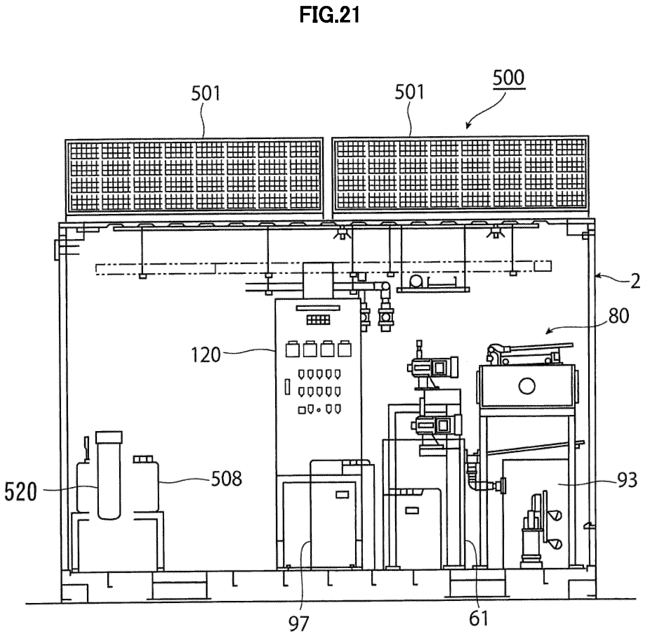

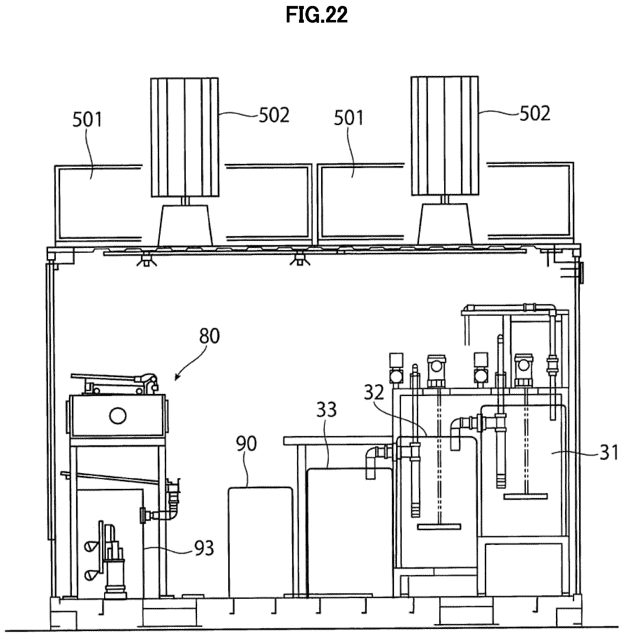

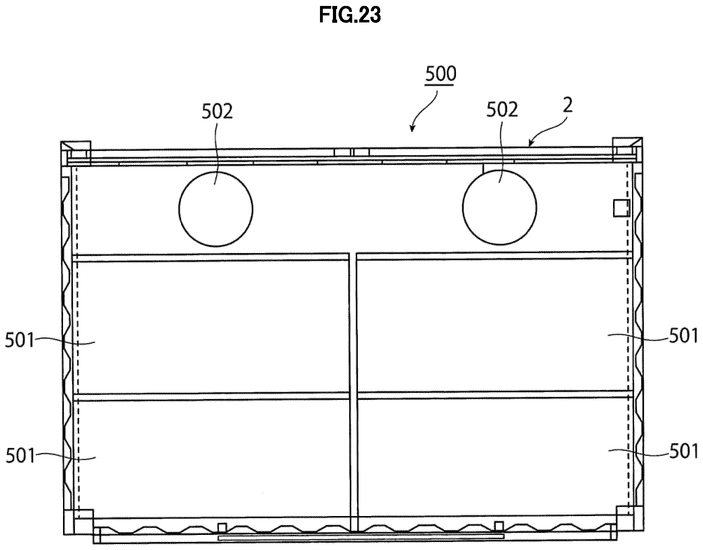

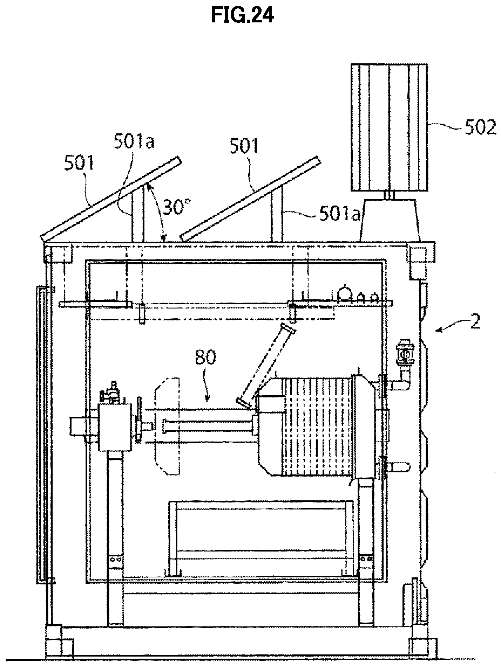

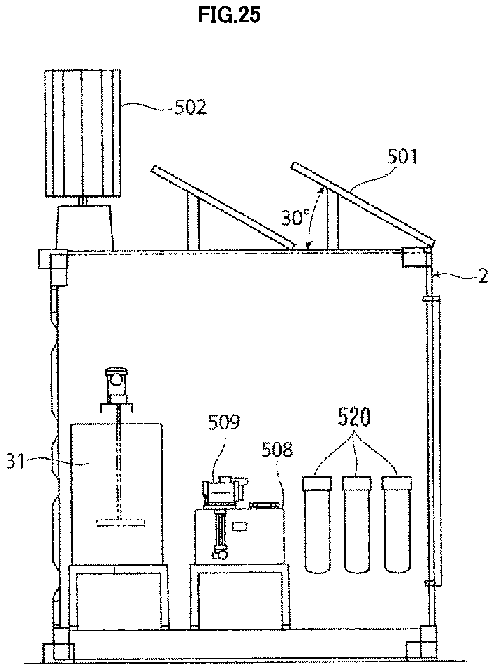

FIG. 20 to FIG. 26 are configuration views for illustrating a water purification apparatus according to a second embodiment of the present invention. The same parts as those of the water purification apparatus according to the first embodiment are denoted by the same reference symbols for description.

For a water purification apparatus 1 according to the second embodiment of the present invention, the amount of raw water to be treated is set smaller than that in the first embodiment. Along with that, capacities and arrangement of treatment tanks and chemical agent tanks, and the like are reduced in size in contrast to those in the first embodiment.

Specifically, as illustrated in FIG. 20 to FIG. 25, the water purification apparatus 500 according to the second embodiment uses a container main body 2 of 12 feet, which conforms to JIS standards. Outer dimensions of the container main body 2 are set as a length of 3,658 mm, a width of 2,438 mm, and a height of 2,591 mm.

Four solar panels 501, 501, and so on and two wind power generators 502, 502 are installed on a top of a roof surface 3 of the container main body 2. The solar panels 501, 501, and so on, each formed into a rectangular shape in plan view with the same length of 1,000 mm and the same width of 1,750 mm as those in the first embodiment, are adopted. Two wind power generators 502, 502 are arranged as in the first embodiment.

A reaction tank 31, a neutralization tank, a stock tank, and a treated water tank are arranged in the stated order from an end on a front side surface 5 side so as to face a left side surface 7 inside the container main body 2. The reaction tank 31, the neutralization tank 32, and the stock tank 33, each having a capacity of 200 L, are used, and the treated water tank having a capacity of 100 L is used.

Further, a filtration device 80 is set inside the container main body 2 so as to extend from the left side surface 7 to a right side surface and face a rear side surface 6. As the filtration device 80, a small-sized filtration device having ten filter chambers, which are fewer than those of the filtration device of the first embodiment, is used.

A slaked lime tank 63, an activated carbon tank 62, and a sulfuric acid tank 61 are housed in the container main body 2 so as to face the filtration device 80. A PAC tank 97 is arranged adjacent to the sulfuric acid tank 61. Tanks, each having a capacity of 200 L, are used as the slaked lime tank 63, the activated carbon tank 62, and the sulfuric acid tank 61. Further, a tank having a capacity of 100 L is used as the PAC tank 97.

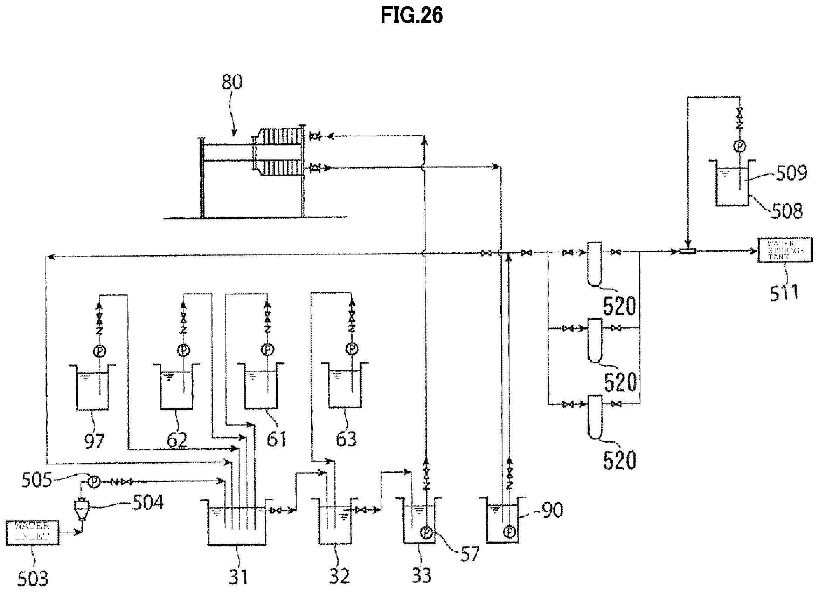

Further, the water purification apparatus 500 according to the second embodiment uses a plurality of cartridge filter type filtration devices 520, 520, and so on are used as second filtration means in place of the sand filtration tank 506. Cartridge filter type filtration devices, each having filtration capacity per unit time of, for example, 0.48 m³/h, arranged in parallel are used as the cartridge filter type filtration devices 520, 520, and so on. The cartridge filter type filtration devices 520, 520, and so on each have a smaller size than that of the sand filtration tank 506. Meanwhile, its filtration capacity per unit time is 0.48 m³/h, which is smaller than 3 m³/h being filtration capacity of the sand filtration tank. Thus, as illustrated in FIG. 26, the cartridge filter type filtration devices 520, 520, and so on are connected in parallel so as to ensure treatment capacity per unit time.

Cartridge filters of the cartridge filter type filtration devices 520, 520, and so on are regularly replaced. However, the cartridge filter type filtration devices 520, 520, and so on are arranged on a downstream side of the first filtration device 80. Thus, treated water supplied to the cartridge filter type filtration devices 520, 520, and so on is formed only of an ultrafine residue, which has not been completely removed by the first filtration device 80.

The other configurations and operations are the same as those of the first embodiment described above, and hence description thereof is omitted.

### [Third Embodiment]

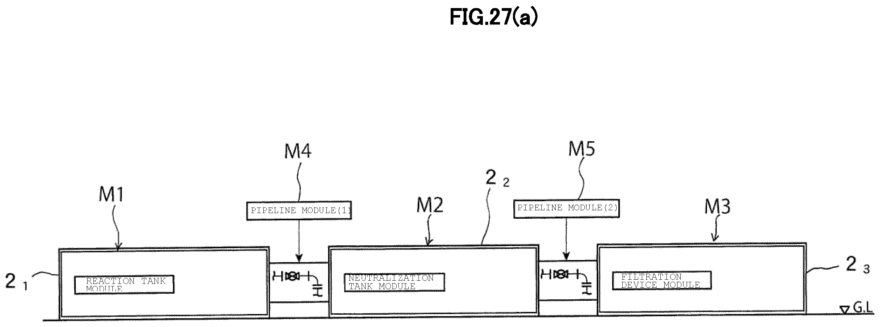

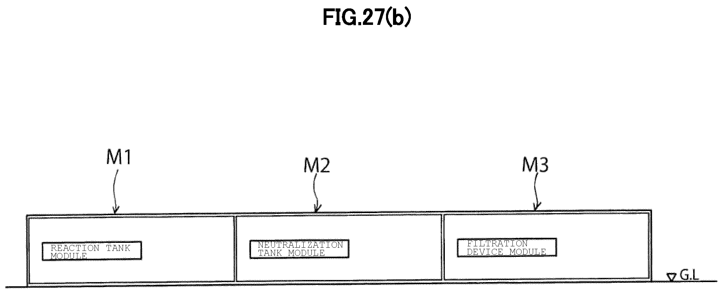

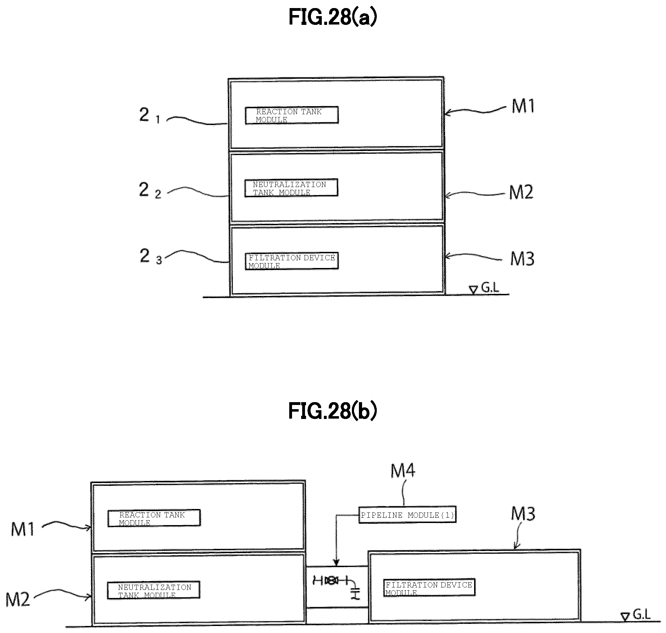

FIGS. 27 and FIGS. 28 are configuration views for illustrating a water purification apparatus according to a third embodiment of the present invention. The same parts as those of the water purification apparatus according to the first embodiment are denoted by the same reference symbols for description.

In a water purification apparatus 1 according to the third embodiment of the present invention, not all the members of the water purification apparatus 500 are housed in a single container main body 2. A plurality of container main bodies 2 are formed as modules for different functions. The water purification apparatus 500 is formed by combining the plurality of modules.

The water purification apparatus 1 illustrated in FIG. 27(a) includes a container main body 2₁ of a reaction tank module M1, a container main body 2₂ of a neutralization tank module M2, and a container main body 2₃ of a filtration device module M3, which are arranged in the horizonal direction so as to be spaced apart from each other as the plurality of modules. The container main body 2₁ of the reaction tank module M1 and the container main body 2₂ of the neutralization tank module M2 are connected to each other through intermediation of a first pipeline module M4. Further, the container main body 2₂ of the neutralization tank module M2 and the container main body 2₃ of the filtration device module M3 are connected to each other through intermediation of a second pipeline module M5.

For example, a reaction tank 31, a sulfuric acid tank 61, and an activated carbon tank are housed in the container main body 2₁ of the reaction tank module M1. Further, a neutralization tank 32, a stock tank 33, an activated carbon tank, and a treated water tank 90 are housed in the container main body 2₂ of the neutralization tank module M2. A first filtration device 80, a sand filtration tank 506, and a disinfectant tank 508 are housed in the container main body 2₃ of the filtration device module M3.

As illustrated in FIG. 27(b), the container main body 2₁ of the reaction tank module M1, the container main body 2₂ of the neutralization tank module M2, and the container main body 2₃ of the filtration device module M3 may be arranged so as to be adjacent to each other in the horizontal direction without any gap.

When the water purification apparatus has the configuration described above, tanks, each having a large capacity, can be used as the reaction tank 31, the sulfuric acid tank 61, the neutralization tank 32, the stock tank 33, the activated carbon tank, the treated water tank 90, the first filtration device 80, the sand filtration tank 506, and the like housed in the container main bodies 2₁ to 2₃ of the reaction tank module M1, the neutralization tank module M2, and the filtration device module M3. Hence, treatment capacity in a water purification treatment per unit time can be significantly increased. Further, solar panels 501, 501, and so on and wind power generators 502, 502 are arranged on a roof surface 3 of each of the container main bodies 2₁ to 2₃. Thus, a large-sized pump can be adopted as a pump used in each of the container main bodies 2₁ to 2₃ and the like. Also in this regard, the treatment capacity can be increased.

Further, in a water purification apparatus 1 illustrated in FIG. 28 (a), the container main body 2₁ of the reaction tank module M1, the container main body 2₂ of the neutralization tank module M2, and the container main body 2₃ of the filtration device module M3 are arranged in a stacked state in a vertical direction.

Further, in a water purification apparatus 1 illustrated in FIG. 28(b), the container main body 2₁ of the reaction tank module M1 is arranged on a top of the container main body 2₂ of the neutralization tank module M2, and the container main body 2₃ of the filtration device module M3 is arranged so as to be spaced apart from the neutralization tank module M2.

Thus, in the cases of these water purification apparatus 1, an installation area for the container main bodies 2 can be relatively reduced while the treatment capacity in the water purification treatment is increased.

Further, in the cases of these water purification apparatus 1, the treated water can be transferred, using gravity, from the container main body 2₁ of the reaction tank module M1 located on an upper side in the vertical direction to the neutralization tank module M2 or the filtration device module M3, which is located below. The installation area for the container main bodies 2 can be relatively reduced while the treatment capacity in the water purification treatment is increased. Thus, energy saving can be achieved.

The other configurations and operations are the same as those of the first embodiment described above, and hence description thereof is omitted.

### [Fourth Embodiment]

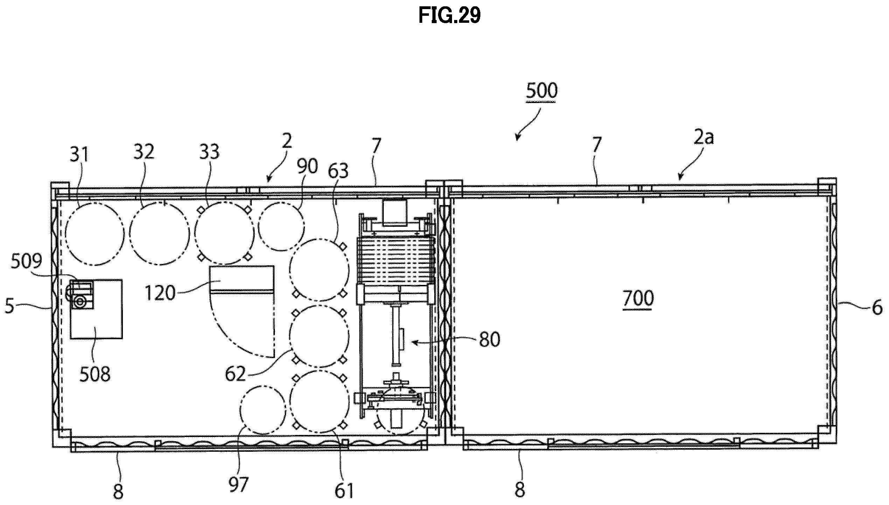

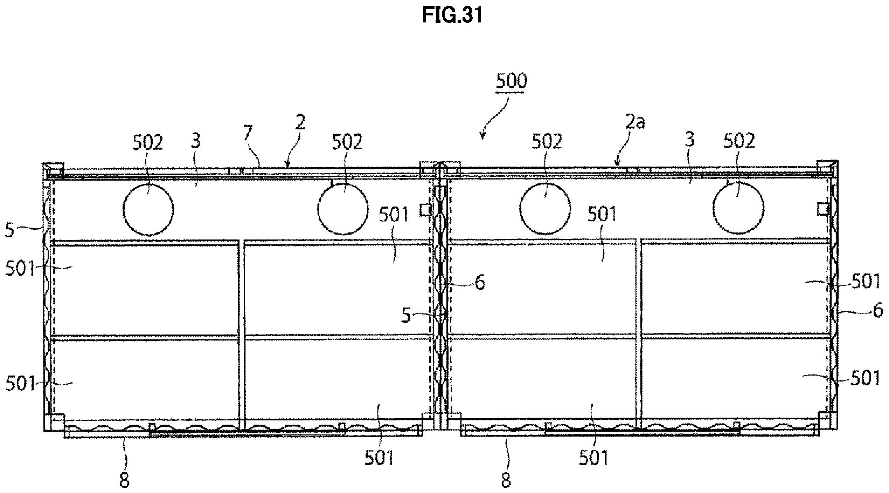

FIG. 29 and FIG. 31 are configuration views for illustrating a water purification apparatus according to a fourth embodiment of the present invention. The same parts as those of the water purification apparatus according to the first embodiment are denoted by the same reference symbols for description.

A water purification apparatus 500 according to the fourth embodiment of the present invention is not configured to produce purified water to be used for potable water or the like, but is used to produce distilled water to be mainly used for medical purposes.

This water purification apparatus 500 includes a container main body 2a for a distillation unit 700 in addition to a container main body 2 for a water purification apparatus. For example, a container main body of 12 feet, which conforms to JIS standards, is adopted as each of the container main body 2 for a water purification apparatus and the container main body 2a for the distillation unit 700.

Similarly to the container main body 2 for a water purification apparatus, four solar panels 501, 501, and so on and two wind power generators 502, 502 are arranged on a roof surface 3 of the container main body 2a of the distillation unit 700. Electric power generated by the solar panels 501, 501, and so on and the wind power generators 502, 502 arranged on the container main body 2a for the distillation unit is mainly used for a heating source for driving the distillation unit 700, a pump, and the like.

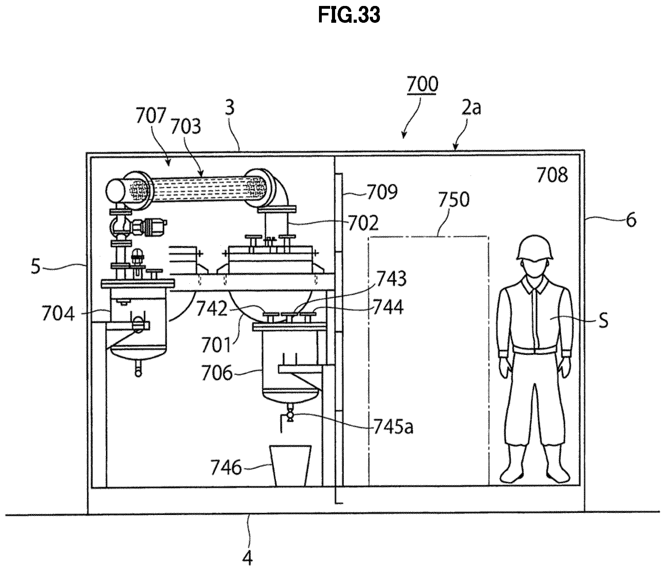

As illustrated in FIG. 33 to FIG. 36, a distillation pot 701, a distillation column 702, a condenser part 703, a first receiver 704, a second receiver 705, and a collection vessel 706 are provided inside the container main body 2a of the distillation unit 700 as a plurality of components of the distillation device, which form the distillation device. Purified water being a target to be distilled is fed into the distillation pot 701. The distillation column 702 has a short length and extracts a vaporized component from the distillation pot 701. The condenser part 703 is one example of a coagulator that coagulates the component that has been vaporized from the distillation pot 701 and has passed through the distillation column 702. The first receiver 704 receives an initial distillate that has been initially coagulated by the condenser part 703. The second receiver 705 receives target distilled water that has been coagulated by the condenser part 703. The collection vessel 706 allows collection of a vaporized material, which has not been completely coagulated by the condenser part 703 when a distal end of the condenser part 703 is sucked to a negative pressure by a vacuum pump.

Further, in the distillation unit 700, an outer dimension (width or length) of at least one of the distillation pot 701 and the first and second receivers 704 and 705 in the horizontal direction is set larger than an outer dimension (height) in the vertical direction.

Further, the condenser part 703 is arranged in the horizontal direction inside the container main body 2a.

Further, the second receiver 705 is formed into the same shape as that of the distillation pot 701, and the first receiver 704 is formed into the same shape as that of the collection vessel 706 so that the same components can be used for the components of the distillation device.

As illustrated in FIG. 33, in the distillation unit 700, an interior of the container main body 2a is partitioned by a partition wall 709 into a first region 707 and a second region 708 at a center in the horizontal direction. The first region 707 is located on the left side in FIG. 33, and the plurality of components of the distillation device are arranged in the first region 707. An operation facility for operating the distillation device is arranged in the second region 708. In consideration of a rise in temperature of the first region 707 in the container main body 2a, it is desired that the partition wall 709 be made of a material having a heat insulation property.

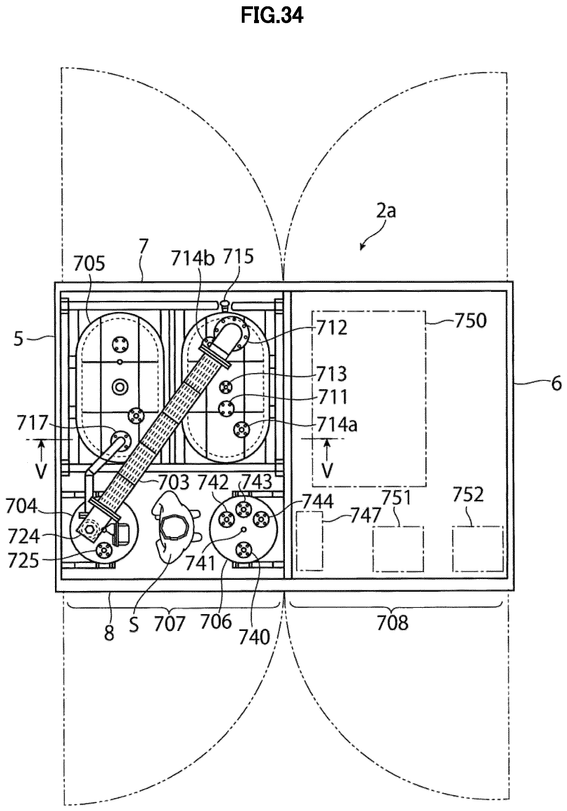

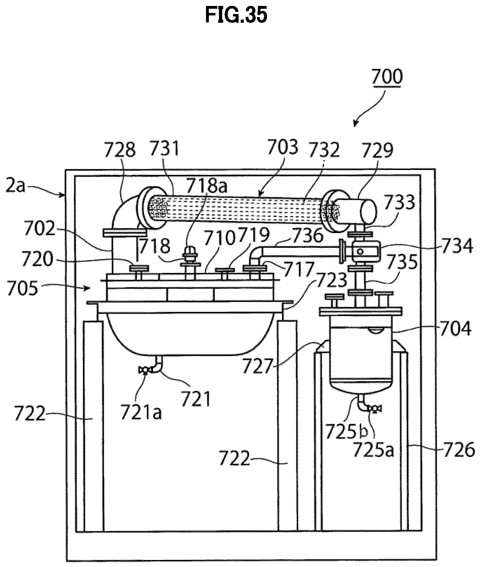

As illustrated in FIG. 34, a feed port 711, an outlet 712, a mounting port 713, an introduction port 714a, a discharge port 714b, and the like are formed in an upper end portion 710 of the distillation pot 701. The feed port 711 allows feeding of the target to be distilled. The outlet 712 is connected to the distillation column 702 so that a vaporized target to be distilled is extracted and is sent to the condenser part 12. A liquid level sensor 713a that detects a liquid level of the target to be distilled is mounted into the mounting port 713. The introduction port 714a allows introduction of a heated vapor or the like as one example of a heating medium for heating the target to be distilled, which is contained in the distillation pot 11. The discharge port 714b allows discharge of the heating medium. As illustrated in FIG. 34 and FIG. 35, a helical pipeline 714c for heating, through which the heat medium such as a heating vapor introduced from the introduction port 714a flows, is accommodated in the distillation pot 11. Further, as illustrated in FIG. 34, a thermometer 715 and a discharge port 716 are provided to a bottom portion of the distillation pot 701. The thermometer 715 measures a temperature of the target to be distilled. The discharge port 716 is openable and closable, and allows discharge of a residue remaining in the distillation pot 701.

Heating means for heating the distillation pot 701 is not limited to a heating vapor or the like supplied through the pipeline 714c for heating, and may be any means as long as the heating means can heat the distillation pot 701. For example, the heating means may directly heat the distillation pot 701 itself through electromagnetic induction action or the like as long as the distillation pot 701 is made of a material that can be heated through electromagnetic induction action.

The second receiver 705 is formed into the same shape as the shape of the distillation pot 701. The second receiver 705 is made of a metal excellent in corrosion resistance, such as titanium, nickel, or stainless steel, and is formed through press working, a welding process, or the like so as to receive a target distillate.

As illustrated in FIG. 34, a supply port 717, a first mounting port 718, a second mounting port 719, and a suction port 720 are formed in an upper end portion of the second receiver 705. The supply port 717 allows the target distillate to be supplied from the condenser part 703. A liquid level gauge 718a that detects a liquid level in the second receiver 705 is mounted into the first mounting port 718. A pressure gauge that detects a pressure in the second receiver 705 is mounted into the second mounting port 719. The suction port 720 is connected to a vacuum pump 747 through intermediation of the collection vessel 706. Further, an outlet 721 including an on-off valve 721a is provided to a bottom portion of the second receiver 705.

As illustrated in FIG. 34 and FIG. 35, the distillation pot 701 and the second receiver 705 are fixed in a state of being supported by a support frame 723 having a rectangular shape in plan view, which is arranged on leg portions 722 placed upright on a floor surface of the first region 707.

Meanwhile, as illustrated in FIG. 34, an opening portion 724 is formed in and a mounting portion 725 or the like is provided to an upper end portion of the first receiver 704. The opening portion 724 receives an initial distillate coagulated by the condenser part 703. A liquid level sensor is mounted into the mounting portion 725. Further, a discharge port 725b including an on-off valve 725a, which is openable and closable, is provided to a bottom portion of the first receiver 704. The discharge port 725b allows discharge and collection of the initial distillate.

As illustrated in FIG. 35, the first receiver 704 is supported and secured by support arms 727. The support arms 727 are arranged in a cantilever beam fashion on leg portions 726. The leg portions 726 are placed upright on the floor surface of the first region 707.

In an upper part of the first region 707 in the container main body 2a, the distillation column 702 having a cylindrical shape with a relatively large outer diameter and a short length is coupled to an outlet of the distillation pot 701. An upper end portion of the distillation column 702 is arranged in the vertical direction so as to face toward a roof portion in the first region 707.

In the upper part of the first region 707 in the container main body 2a, the condenser part 703 is arranged so as to extend horizontally from the upper end portion of the distillation column 702 to the first receiver 704 along a diagonal line across the first region 707.

Further, the condenser part 703 is directly connected to the distillation pot 701 through intermediation of the distillation column 702 having a short length. As a result, a water vapor immediately after vaporization, which is evaporated from the distillation pot 701, is rapidly cooled and liquified by accurately controlling a temperature in the distillation pot 701 in a plurality of predetermined steps, and is selectively collected and received in the first receiver 704, the second receiver 705, or the like. As a result, distillation efficiency for target distilled water, which is determined by a target amount of distilled water with respect to heating energy, can be improved as much as possible.

The condenser part 703 is formed as a member having a cylindrical shape with a relatively large outer diameter. Both end portions 728 and 729 of the condenser part 703 in the longitudinal direction are closed. A plurality of narrow communication pipes 732 are arranged in a coagulation portion 731 positioned between the closed end portions 728 and 729 so as to bring the end portions 728 and 729 of the condenser part 703 in the longitudinal direction into communication with each other. A gas being a target to be distilled, which has been vaporized from the heated distillation pot 701, flows through the communication pipes 732. A cooling medium such as cooling water for cooling the gas passing through the plurality of communication pipes 732 is supplied to the coagulation portion 731 of the condenser part 703.

The upper end portion of the distillation column 702 mounted to the outlet of the distillation pot 701 is connected to one end portion 728 of the condenser part 703. Further, a pipeline 733 branching toward the first receiver 704 and the second receiver 705 is coupled to another end portion 729 of the condenser part 703. An electric three-way valve 734 that can be brought into a full closed state and change a direction of flow of a distillate from another end portion of the condenser part 703 is provided between the first receiver 704 and the second receiver 705. The distillate flowing out from another end portion of the condenser part 703 can be selectively received in the first receiver 704 and the second receiver 705 via pipelines 735 and 736 by switching the electric three-way valve 734. An openable and closeable auxiliary discharge port (not shown) that allows the distillate from the condenser part 703 to be experimentally extracted by closing the electric three-way valve 734 is provided to the another end portion 729 of the condenser part 703.

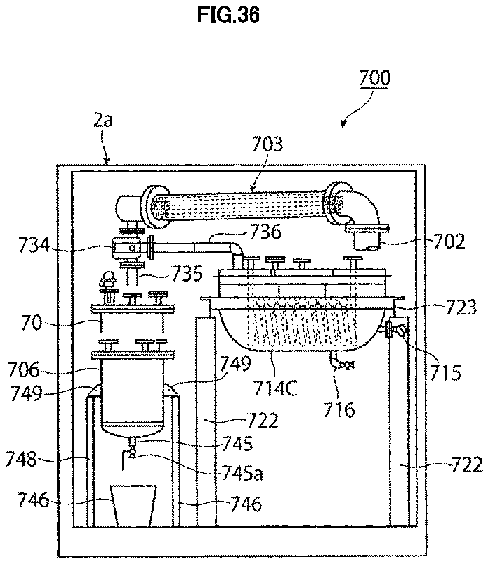

As illustrated in FIG. 34, an air inlet 740, an opening portion 741, an inflow port 742, an outflow port 743, a suction port 744, and the like are provided to an upper end portion of the collection vessel 706. The air inlet 740 is connected to the condenser part 703, the first receiver 704, and the second receiver 705. A pressure gauge is mounted into the opening portion 741. The cooling water flows into the inflow port 742. The cooling water flows out from the outflow port 743. The suction port 744 is connected to the vacuum pump. Further, a discharge port 745 is provided to a bottom portion of the collection vessel 706. The discharge port 745 allows the initial distillate to be discharged and collected, and can be opened and closed by an on-off valve 745a. In FIG. 36, there is illustrated a bucket 746 in which drain collected in the collection vessel 706 is received.

The collection vessel 706 is arranged in proximity to the vacuum pump 747 arranged in the second region 708. A pipeline for suction is made as short as possible to thereby increase suction efficiency.

As illustrated in FIG. 36, the collection vessel 706 is supported and secured by support arms 749. The support arms 749 are arranged in a cantilever beam fashion on leg portions 748. The leg portions 748 are placed upright on the floor surface of the first region 707.

As illustrated in FIG. 33 and FIG. 34, a heat medium circulating device 750, a first cooling water circulating device 751, a second cooling water circulating device 752, the vacuum pump 747, and the like are provided in the second region 708 in the container main body 2a. The heat medium circulating device 750 circulates the heat medium such as a heating vapor supplied to the distillation pot 701. The first cooling water circulating device 751 circulates the cooling water through the heat medium circulating device 750. The second cooling water circulating device 752 circulates the cooling water through the condenser part 703 and the like. Further, a work space in which a worker S operating the distillation unit 700 works is ensured in the second region 708 in the container main body 2a.

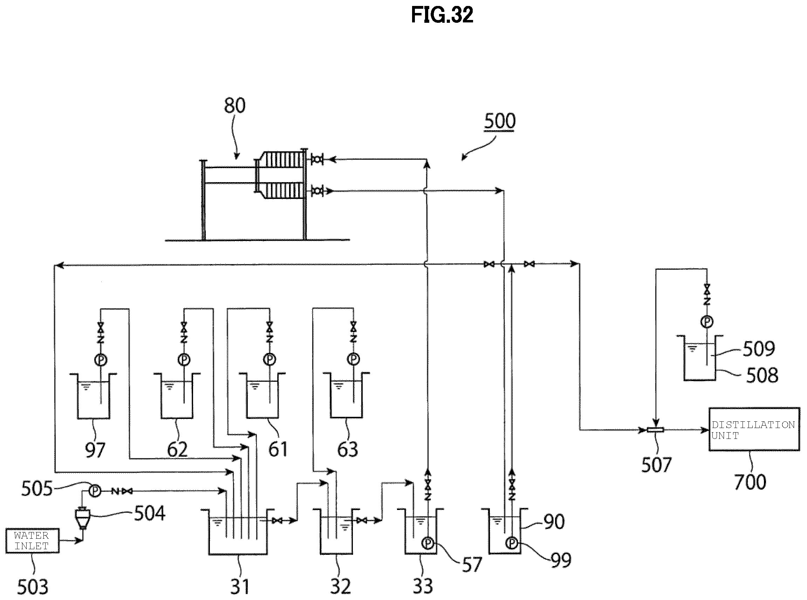

As described above, as illustrated in FIG. 32, the water purification apparatus 500 according to the fourth embodiment includes the distillation unit 700. Purified distilled water can be produced by distilling the treated water, which has been turned into purified water by the water purification apparatus 500, through the distillation unit 700.

As illustrated in FIG. 32, in the water purification apparatus 500 according to the fourth embodiment, a chelate liquid is supplied and mixed in place of a disinfectant for potable water. Metal ions are deactivated to thereby enhance safety.

The other configurations and operations are the same as those of the first embodiment described above, and hence description thereof is omitted.

### Industrial Applicability

It is possible to provide a water purification apparatus using a wastewater treatment device, which allows reduction in size and cost of the apparatus and is capable of generating a sufficient amount of purified water with electric power supply means using natural energy, such as a solar panel or a wind power generator, without generating any useless wastewater.

### Reference Signs List

1 wastewater treatment device
2 container main body
31 reaction tank
32 neutralization tank
33 stock tank
61 sulfuric acid tank
62 activated carbon tank
63 slaked lime tank
200 rinse water storage tank
500 water purification apparatus

## Claims

1. A water purification apparatus using a wastewater treatment device, comprising:
a transportable base;
foreign matter removal means for removing foreign matter from raw water supplied from an outside;
a plurality of treatment tanks arranged on the base in accordance with water purification treatment steps for the raw water from which the foreign matter has been removed by the foreign matter removal means;
a plurality of chemical agent tanks, each containing a chemical agent to be fed to at least one of the plurality of treatment tanks;
filtration means for filtering treated water that has been treated in the plurality of treatment tanks; and
disinfecting means for disinfecting the treated water that has been filtered by the filtration means to obtain potable water,
wherein all steps of a water purification treatment for turning the raw water into the potable water except for at least a step of removing the foreign matter from the raw water are completed on the base.

2. A water purification apparatus using a wastewater treatment device, comprising:
one or a plurality of container main bodies into which raw water to be treated is introduced from an outside;
foreign matter removal means for removing foreign matter from the raw water that has been introduced from the outside;
a plurality of treatment tanks including at least a first treatment tank into which the raw water to be treated is to be introduced, a second treatment tank into which treated water that has been treated in the first treatment tank is to be introduced, and a third treatment tank into which the treated water that has been treated in the second treatment tank is to be introduced, the plurality of treatment tanks being arranged inside the container main body so that heights of liquid levels become lower in order;
first to fourth chemical agent tanks that contain chemical agents to be fed to the first to third treatment tanks;
first filtration means for filtering the treated water stored in the third treatment tank;
second filtration means for filtering the treated water that has been filtered by the first filtration means so as to turn the treated water into potable water; and
disinfecting means for disinfecting the treated water that has been filtered by the second filtration means to obtain potable water,
wherein all steps of a water purification treatment for turning the raw water into the potable water except for at least a step of removing the foreign matter from the raw water are completed inside the one or plurality of container main bodies.

3. The water purification apparatus using a wastewater treatment device according to claim 1 or 2, further comprising electric power supply means including at least one of a solar panel or a wind power generator, the electric power supply means supplying electric power to at least one or all of devices configured to transfer the raw water and the treated water, and feed and agitate the chemical agents.

4. The water purification apparatus using a wastewater treatment device according to claim 2, wherein the first and second treatment tanks are configured so that the wastewater or the treated water introduced into the first and second treatment tanks is retained therein for predetermined time periods, respectively.

5. The water purification apparatus using a wastewater treatment device according to claim 2, wherein the third treatment tank is arranged directly on a bottom surface of the container main body, and the treated water is transferred from the third treatment tank to the first filtration device by a pump.

6. The water purification apparatus using a wastewater treatment device according to claim 2, wherein a raw water tank for storing the raw water to be treated is arranged inside or outside the container main body, and the raw water is transferred from the raw water tank to the first treatment tank by a pump arranged in the raw water tank.

7. The water purification apparatus using a wastewater treatment device according to claim 2, wherein the first filtration device is configured to filter the treated water retained in the third treatment tank through injection of the treated water into a plurality of filter members.
